# EUROPEAN PATENT SPECIFICATION

(11) **EP 4 620 614 B1**
(45) Date of publication and mention of the grant of the patent: **22.07.2026**
(21) Application number: 23928598.4
(22) Date of filing: 22.03.2023
(51) Int. Cl.: B23Q 11/12, H02K 9/06

(54) **TABLE DRIVE DEVICE, MACHINE TOOL, AND WORKPIECE PROCESSING METHOD**
TISCHANTRIEBSVORRICHTUNG, WERKZEUGMASCHINE UND WERKSTÜCKVERARBEITUNGSVERFAHREN
DISPOSITIF D'ENTRAÎNEMENT DE TABLE, MACHINE-OUTIL ET PROCÉDÉ DE TRAITEMENT DE PIÈCE

(43) Date of publication of application: 24.09.2025
(73) Proprietor: Yamazaki Mazak Corporation, Niwa-gun, Aichi 480-0197 (JP)
(72) Inventor: SATO, Kimihiko, Niwa-gun, Aichi 480-0197 (JP); OGAWA, Yukio, Niwa-gun, Aichi 480-0197 (JP); SAKAI, Nobuhiro, Niwa-gun, Aichi 480-0197 (JP)
(74) Representative: TBK
(86) International application number: PCT/JP2023/011057
(87) International publication number: WO 2024/195015

(56) References cited:
- JP-A- 2002 346 860
- JP-A- 2006 142 385
- JP-A- 2018 079 521
- JP-A- 2022 189 362
- JP-A- S58 156 760
- KR-B1- 100 893 453
- US-A1- 2008 047 120

## Description

### Technical Field

The present invention relates to a table drive, a machine tool, and a workpiece machining method.

### Background Art

A technique for cooling a heating element such as a motor is known.

As a related art, Patent Literature 1 discloses a cooling circuit for a heating element in an indexing device for a machine tool. The cooling circuit disclosed in Patent Literature 1 includes a cooling flow passage provided around the heating element. More specifically, in Patent Literature 1, a cooling jacket is disposed in contact with a stator of a motor. Patent Literature 2 discloses a table driving with a first motor and a machining method while cooling such a motor, which form the basis of the preambles of independent claims 1, 15.

### Citation List

### Patent Literature

PTL1: JP 2010-590 A.
PTL2: US 2008/047120 A1

### Summary of Invention

### Technical Problem

It is an object of the present invention to provide a table drive, a machine tool, and a workpiece machining method capable of eliminating or minimizing transfer of heat generated from a motor to a support base that supports a table apparatus.

A table drive according to some embodiments includes: a table apparatus including a table that supports a workpiece; a support base that supports the table apparatus; a first motor including a first portion in contact with the support base and a second portion disposed at a position farther from the support base than the first portion, the first motor being configured to move the table apparatus relative to the support base; and a cooling apparatus configured to cool the first motor. The cooling apparatus includes: a fan configured to give momentum to air; a supply duct configured to supply the air to the first portion of the first motor; and an exhaust duct configured to discharge the air from a periphery of the second portion of the first motor.

A machine tool according to some embodiments includes: a machining head that supports a tool for machining a workpiece; a mover configured to move the machining head; and a table drive. The table drive includes: a table apparatus including a table that supports the workpiece; a support base that supports the table apparatus; a first motor including a first portion in contact with the support base and a second portion disposed at a position farther from the support base than the first portion, the first motor being configured to move the table apparatus relative to the support base; and a cooling apparatus configured to cool the first motor. The cooling apparatus includes: a fan configured to give momentum to air; a supply duct configured to supply the air to the first portion of the first motor; and an exhaust duct configured to discharge the air from a periphery of the second portion of the first motor.

A workpiece machining method according to some embodiments includes steps of: cooling a first motor in contact with a support base; fixing a workpiece to a table of a table apparatus; moving the table apparatus relative to the support base that supports the table apparatus, by using a driving force of the first motor: and machining the workpiece using a tool. The cooling the first motor includes: giving momentum to air using a fan; supplying the air to a first portion of the first motor from a supply duct; causing the air to flow from the first portion of the first motor toward a second portion of the first motor in a direction away from the support base to cool the first motor using the air; and discharging the air from a periphery of the second portion of the first motor through an exhaust duct.

### Effects of Invention

According to the present invention, a table drive, a machine tool, and a workpiece machining method capable of eliminating or minimizing transfer of heat generated from a motor to a support base that supports a table apparatus are provided.

### Brief Description of Drawings

[FIG. 1] FIG. 1 is a schematic cross-sectional view of a machine tool according to a first embodiment, schematically illustrating the machine tool.
[FIG. 2] FIG. 2 a schematic cross-sectional view of arrangements of a supply duct, an exhaust duct, and a cover, schematically illustrating an example of the arrangements.
[FIG. 3] FIG. 3 is a schematic illustration of an example of a mechanism for transferring dynamic power from a first motor to a support block.
[FIG. 4] FIG. 4 is a schematic illustration of an example of a mechanism for transferring dynamic power from a second motor to a rotation body.
[FIG. 5] FIG. 5 is a schematic cross-sectional view of arrangements of the supply duct and the exhaust duct, schematically illustrating an example of the arrangements.
[FIG. 6] FIG. 6 is a diagram for describing an example of a second cooling apparatus.
[FIG. 7] FIG. 7 is a schematic cross-sectional view of an arrangement of a duct, schematically illustrating a modification of the arrangement.
[FIG. 8] FIG. 8 is a schematic plan view of an arrangement of the first motor, schematically illustrating a modification of the arrangement.
[FIG. 9] FIG. 9 is a schematic perspective view for describing an example of a mover for moving a machining head.
[FIG. 10] FIG. 10 is a schematic illustration of a machine tool according to a second embodiment.
[FIG. 11] FIG. 11 is a schematic illustration of a machine tool according to a modification of the second embodiment.
[FIG. 12] FIG. 12 is a schematic illustration of an example of a mechanism for transferring the dynamic power from the first motor to the rotation body, schematically illustrating an example of the mechanism.
[FIG. 13] FIG. 13 is a schematic illustration of part of the machine tool according to a third embodiment.
[FIG. 14] FIG. 14 is a schematic cross-sectional view of part of the machine tool according to the third embodiment, schematically illustrating the part of the machine tool.
[FIG. 15] FIG. 15 is a schematic perspective view for describing an example of a mover for moving the machining head.
[FIG. 16] FIG. 16 is a schematic illustration of an example of arrangements of the supply duct, the exhaust duct, and the cover.
[FIG. 17] FIG. 17 is a schematic illustration of an example of a connection relationship between a controller and devices to be controlled.
[FIG. 18] FIG. 18 is a schematic illustration of a state in which the controller is capable of controlling a fan motor, based on a signal from a temperature sensor.
[FIG. 19] FIG. 19 is a flowchart illustrating an example of a workpiece machining method according to an embodiment.

### Description of Embodiments

Hereinafter, a table drive 1, a machine tool 100, and a workpiece machining method according to embodiments will be described with reference to the drawings. It is to be noted that in the following description of the embodiments, portions and members having the same functions are denoted by the same reference numerals, and repeated descriptions of the portions and members denoted by the same reference numerals will be omitted.

### (First Embodiment)

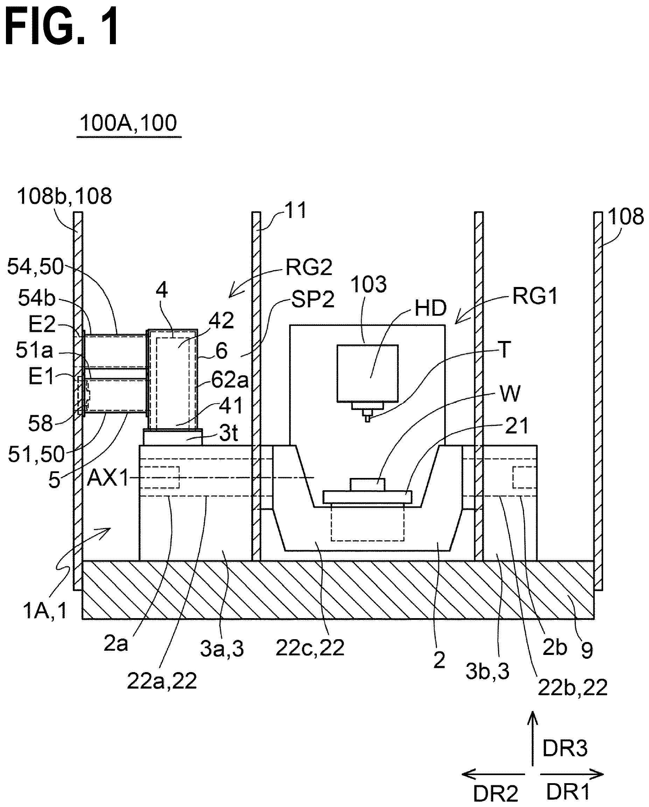

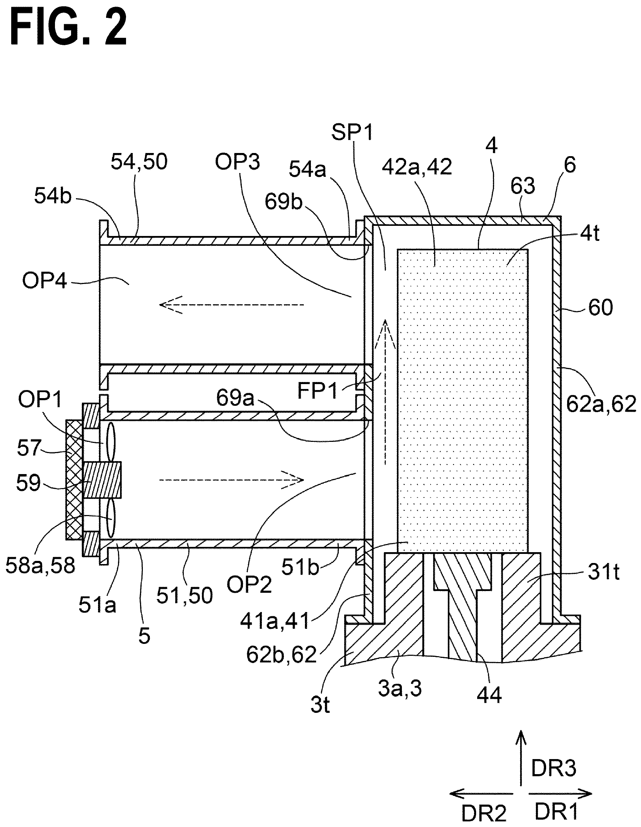

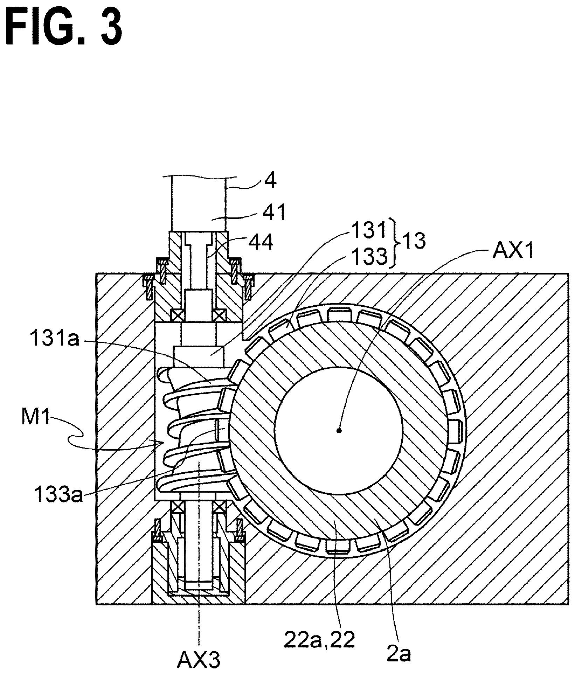

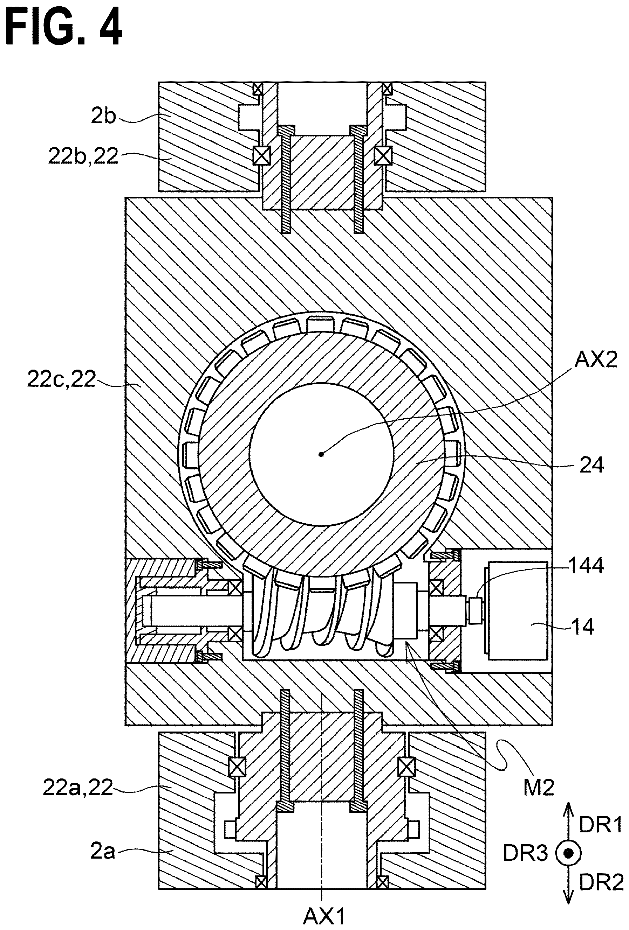

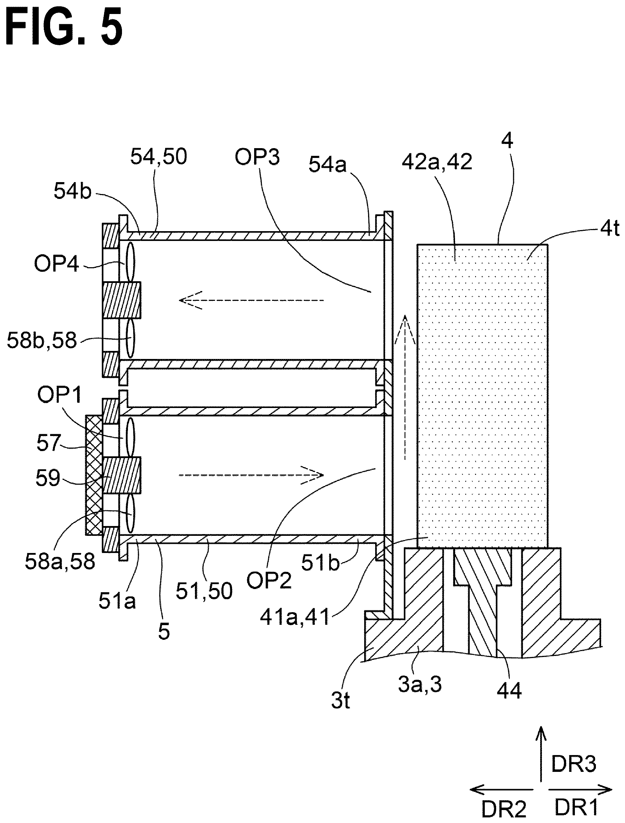

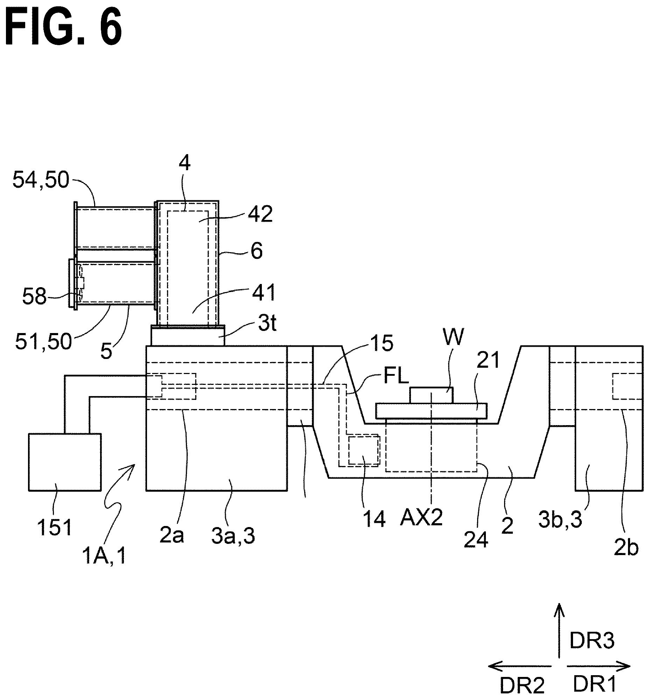

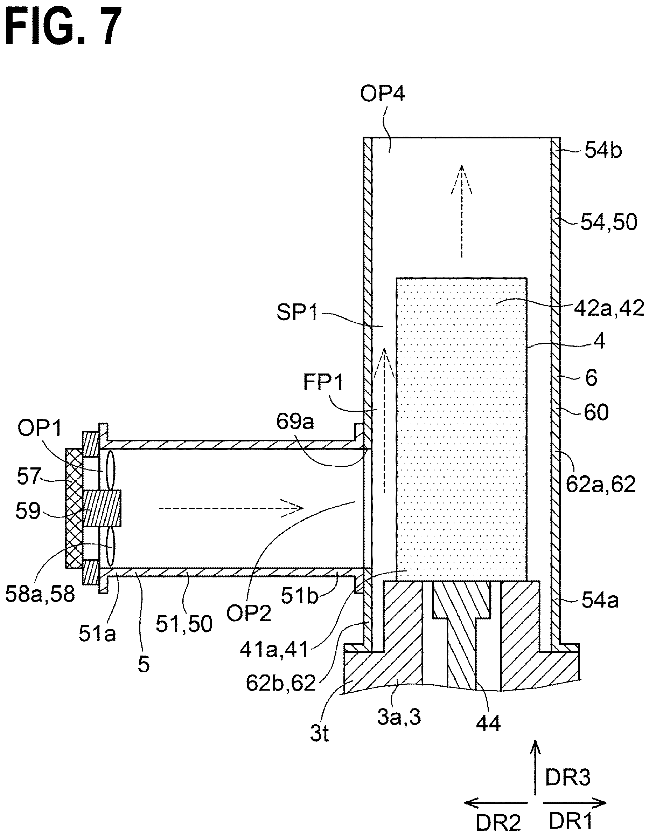

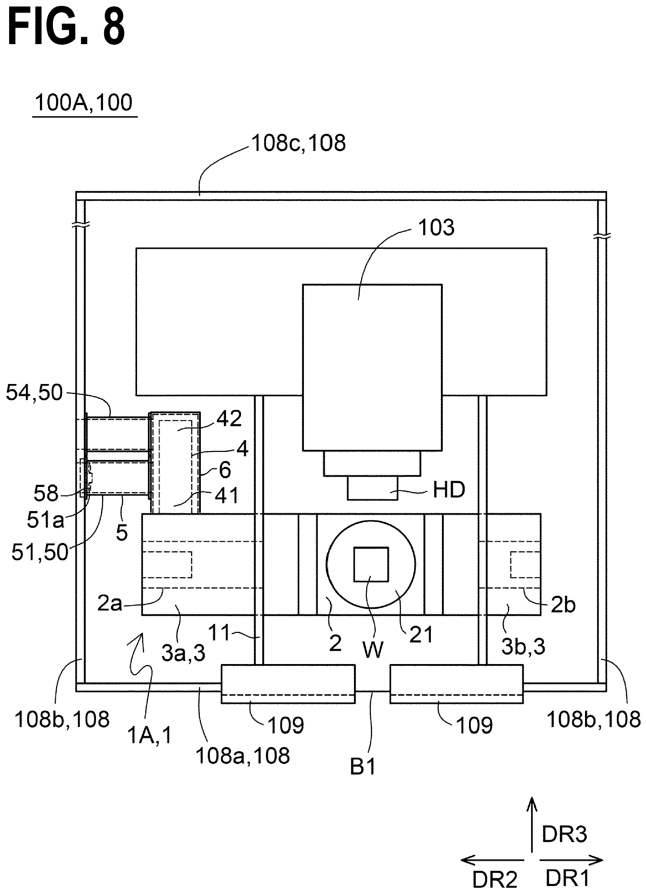

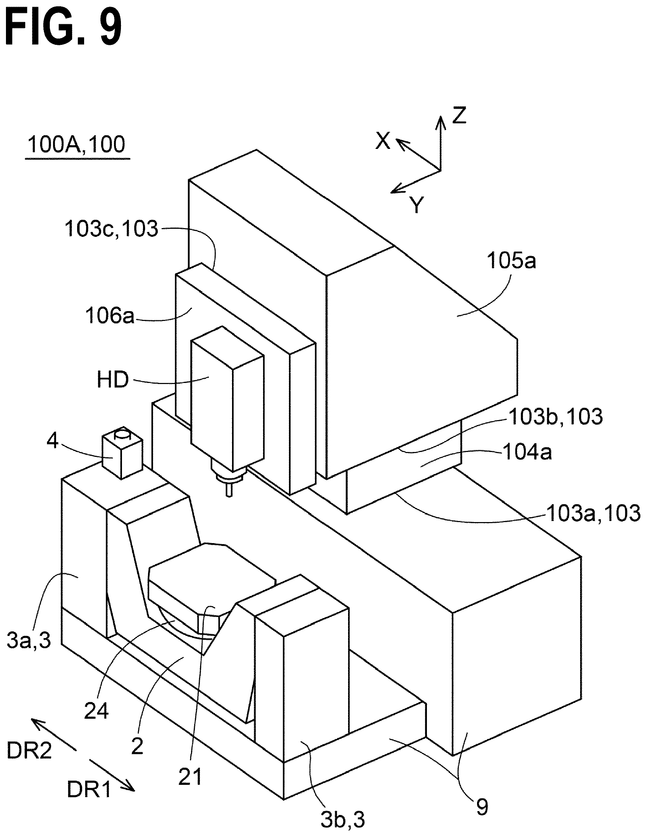

Hereinafter, a table drive 1A and a machine tool 100A according to a first embodiment will be described with reference to FIGs. 1 to 9. FIG. 1 is a schematic cross-sectional view of the machine tool 100A according to a first embodiment, schematically illustrating the machine tool 100A. FIG. 2 a schematic cross-sectional view of arrangements of a supply duct 51, an exhaust duct 54, and a cover 6, schematically illustrating an example of the arrangements. It is to be noted that in FIG. 2, a region in which a first motor 4 is disposed is hatched with dots, and an illustration of an internal structure of the first motor 4 is omitted. FIG. 3 is a schematic illustration of an example of a mechanism for transferring dynamic power from the first motor 4 to a support block 22. FIG. 4 is a schematic illustration of an example of a mechanism for transferring dynamic power from a second motor 14 to a rotation body 24. FIG. 5 is a schematic cross-sectional view of arrangements of the supply duct 51 and the exhaust duct 54, schematically illustrating an example of the arrangements. It is to be noted that in FIG. 5, the region in which the first motor 4 is disposed is hatched with dots, and an illustration of the internal structure of the first motor 4 is omitted. FIG. 6 is a diagram for describing an example of a second cooling apparatus 15. FIG. 7 is a schematic cross-sectional view of an arrangement of the duct 50, schematically illustrating a modification of the arrangement. It is to be noted that in FIG. 7, the region in which the first motor 4 is disposed is hatched with dots, and an illustration of the internal structure of the first motor 4 is omitted. FIG. 8 is a schematic plan view of an arrangement of the first motor 4, schematically illustrating a modification of the arrangement. FIG. 9 is a schematic perspective view for describing an example of a mover 103 for moving a machining head HD. It is to be noted that in FIG. 9, illustrations of the duct 50, the cover 6, a partition wall 11, and an outer wall 108 are omitted.

As illustrated in FIG. 1, the table drive 1A according to the first embodiment includes a table apparatus 2, a support base 3, the first motor 4, and a cooling apparatus 5.

The table apparatus 2 includes a table 21, which supports a workpiece W. The workpiece W is an object to be machined. In addition, the support base 3 supports the table apparatus 2.

The first motor 4 includes: a first portion 41, which is in contact with the support base 3; and a second portion 42, which is disposed at a position farther from the support base 3 than the first portion 41. In an example illustrated in FIG. 2, the first portion 41 of the first motor 4 is supported by the support base 3. In the example illustrated in FIG. 2, the first portion 41 includes a first end portion 41a of the first motor 4, and the second portion 42 includes a second end portion 42a of the first motor 4. The first end portion 41a is an end portion closer to the support base 3 than the second end portion 42a, and the second end portion 42a is an end portion farther from the support base 3 than from the first end portion 41a.

In an example illustrated in FIG. 1, the first motor 4 moves the table apparatus 2 relative to the support base 3. In the example illustrated in FIG. 1, the first motor 4 tilts the table apparatus 2 about a first axis AX1. When the table apparatus 2 is moved relative to the support base 3, an electric current is supplied to the first motor 4. The first motor 4 converts electric energy into kinetic energy, and the table apparatus 2 is moved relative to the support base 3 with the kinetic energy. It is to be noted that the electric current flows through the first motor 4, and the first motor 4 generates heat.

The cooling apparatus 5 cools the first motor 4. The cooling apparatus 5 includes: a fan 58, which gives momentum to the air; and a duct 50, through which the air flows. In the example illustrated in FIG. 2, the table drive 1A includes a fan motor 59, which drives the fan 58. When the fan 58 is rotationally driven by the fan motor 59, the momentum is applied to the air by the fan 58. In this manner, the air to which the momentum is given flows inside the duct 50.

The duct 50 includes the supply duct 51 and the exhaust duct 54. The supply duct 51 supplies the air to the first portion 41 of the first motor 4 (in other words, the first portion 41 of the first motor 4, and the first portion 41 is closer to the support base 3). The exhaust duct 54 discharges the air from the periphery of the second portion 42 of the first motor 4 (in other words, the periphery of the second portion 42 of the first motor 4, and the second portion 42 is on an opposite side of the support base 3).

As illustrated in FIG. 1, in addition to the above-described table drive 1A, the machine tool 100A according to the first embodiment includes: the machining head HD, which supports a tool T for machining a workpiece W; and the mover 103, which moves the machining head. The machining head HD may be configured to support the tool T so that the tool T has an attitude to be substantially parallel to a vertical direction, may be configured to support the tool T so that the tool T has an attitude to be substantially parallel to the horizontal direction, or may be configured to support the tool T so that the attitude of the tool T is changeable. The machine tool 100A may include the outer wall 108, which surrounds the table drive 1A and the machining head HD in a plan view. The outer wall 108 may be disposed to surround the table drive 1A, the machining head HD, and the mover 103 in a plan view. In addition, an opening B1 (see FIG. 8, if necessary) through which the workpiece W is insertable from the outside of the outer wall 108 to the inside of the outer wall 108 may be provided on the outer wall 108. Further, the machine tool 100A may include doors 109 (see FIG. 8, if necessary), which are capable of opening and closing the opening B1.

In the table drive 1A and the machine tool 100A according to the first embodiment, the air is supplied by the supply duct 51 to the first portion 41 of the first motor 4, and the first portion 41 of the first motor 4 is effectively cooled. Thus, the heat generated from the first motor 4 is prevented from transferring from the first portion 41 to the support base 3, or such transfer of the heat is eliminated or minimized. In addition, in the table drive 1A and the machine tool 100A according to the first embodiment, the air is supplied to the first portion 41, and the air is exhausted from the periphery of the second portion 42. In this manner, an air flow from the first portion 41 of the first motor 4 toward the second portion 42 of the first motor 4 is formed. Thus, the air used for cooling the first portion 41, which is close to the support base 3, is also used for cooling the central portion of the first motor 4 or the second portion 42 of the first motor 4. Also, a direction from the first portion 41 of the first motor 4 toward the second portion 42 of the first motor 4 is a direction away from the support base 3. Thus, the air, the temperature of which is increased by contact with the first motor 4, is prevented from moving toward the support base 3, or such movement of the air is eliminated or minimized.

In the table drive 1A and the machine tool 100A according to the first embodiment, the transfer of the heat from the first motor 4 to the support base 3 via the first portion 41 or via the air is eliminated or minimized, and thus thermal deformation of the support base 3 and the table apparatus 2 is eliminated or minimized. Therefore, degradation, occurring along with an increase in use time of the first motor 4, of the positional accuracy of the workpiece W, which is supported by the table apparatus 2, is eliminated or minimized. In addition, since the degradation of the positional accuracy of the workpiece W is eliminated or minimized, degradation of the machining accuracy of the workpiece W is also eliminated or minimized. In particular, the first portion 41, which is close to the support base 3, of the first motor 4 is preferentially cooled by the air, and the air used for cooling the first portion 41 moves in the direction away from the support base 3, so that the thermal deformation of the support base 3 and the table apparatus 2 is efficiently eliminated or minimized.

In the table drive 1A and the machine tool 100A according to the first embodiment, the cooling apparatus 5, which uses the duct 50 and the fan 58, is used. In comparison with a case where a coolant or a similar substance is circulated inside the support base 3, complication of the structure of the support base 3 is eliminated or minimized. In addition, cooling is performed by the air, and only a small amount of electric power is consumed by the cooling apparatus 5 (in other words, a cooling method for saving energy is achieved). Further, cooling is performed by the air, and only a small burden is imposed on the environment.

### (Optional and Additional Configurations)

Subsequently, optional additional configurations that are adoptable in the table drive 1A and the machine tool 100A according to the first embodiment will be described with reference to FIGs. 1 to 9.

### (Tilting of Table Apparatus 2)

In the example illustrated in FIG. 1, the support base 3 supports the table apparatus 2 so that the table apparatus 2 is tiltable about the first axis AX1. To be more specific, the table apparatus 2 includes the support block 22, which directly or indirectly supports the table 21, and the support base 3 supports the support block 22 so that the support block 22 is tiltable about the first axis AX1. The support block 22 is made up of an assembly of a plurality of component parts. The support block 22 may be made up of the assembly including: a first block 22a (for example, a first block having a cylindrical shape), which is supported to be tiltable by the first support base 3a; a second block 22b (for example, a second block having a cylindrical shape), which is supported to be tiltable by the second support base 3b; and a third block 22c, which rotatably supports a rotation body, to which the table 21 is fixed.

In the example illustrated in FIG. 1, the first motor 4 is a motor that tilts the support block 22 about the first axis AX1. The first axis AX1 is, for example, an axis parallel to a horizontal plane.

In the example illustrated in FIG. 1, the first motor 4 is not incorporated in the support base 3. In other words, the first motor 4 is disposed outside the support base 3. In this case, the structure of the support base 3 is simplified, as compared with a case where the first motor 4 is a direct drive motor incorporated in the support base 3. Also, in a case where the first motor 4 is disposed outside the support base 3, heat generated from the first motor 4 does not stay in the support base 3. Thus, even though the first motor 4 is not cooled by the cooling apparatus, the thermal deformation of the support base 3 caused by the heat generation of the first motor 4 is relatively small. In a case where the first portion 41 of the first motor 4 is preferentially cooled by the above-described cooling apparatus 5, the thermal deformation of the support base 3 caused by the heat generation of the first motor 4 is further smaller.

In the example illustrated in FIG. 1, the support block 22 includes: a first end portion 2a, which is supported to be tiltable by the support base 3 (more specifically, the first support base 3a); and a second end portion 2b, which is supported to be tiltable by the support base 3 (more specifically, the second support base 3b). In the example illustrated in FIG. 3, an output shaft 44 of the first motor 4 is connected with the support block 22 (more specifically, the first end portion 2a of the support block 22) so that the dynamic power is transferable. In an example illustrated in FIG. 3, the output shaft 44 of the first motor 4 rotates, and then the support block 22 tilts about the first axis AX1.

Additionally, as illustrated in FIG. 4, the table apparatus 2 may include: the rotation body 24, to which the table 21 is fixed (see FIG. 1, if necessary); and the second motor 14. The second motor 14 rotates the rotation body 24 about a second axis AX2.

In an example illustrated in FIG. 4, the rotation body 24 is supported by the support block 22 so that the rotation body 24 is rotatable about the second axis AX2. In addition, an output shaft 144 of the second motor 14 is connected with the rotation body 24 so that the dynamic power is transferable. In the example illustrated in FIG. 4, the output shaft 144 of the second motor 14 rotates, and then the rotation body 24 rotates about the second axis AX2. Thus, the table 21, to which the rotation body 24 is fixed, rotates about the second axis AX2. In the example illustrated in FIG. 4, the second axis AX2 is an axis perpendicular to a direction parallel to the first axis AX1. In the example illustrated in FIG. 4, the second motor 14 is a motor that rotates the rotation body 24 via a mechanical dynamic power transfer mechanism M2. Alternatively, the second motor 14 may be a direct drive motor that directly drives the rotation body 24. To be more specific, the second motor 14 may include: a rotor fixed to the rotation body 24; and a stator fixed to the support block 22.

### (Cover 6)

In the example illustrated in FIG. 2, the table drive 1A includes the cover 6, which surrounds the first motor 4. The cover 6 includes a first port 69a, a second port 69b, and a wall 60.

The first port 69a functions as an introduction port for introducing the air from the supply duct 51 to an internal region SP1 of the cover 6. The second port 69b functions as a discharge port for discharging the air from the internal region SP1 of the cover 6 to the exhaust duct 54.

In the example illustrated in FIG. 2, the cover 6 defines an air flow passage from the first port 69a to the second port 69b. Hereinafter, an air flow passage defined by the cover 6 (more specifically, an air flow passage from the first port 69a to reach the second port 69b) will be defined as a first flow channel FP1.

In a case where the table drive 1A includes the cover 6, which surrounds the first motor 4, cooling efficiency of cooling the first motor 4 by the air is improved. In addition, the heat generated from the first motor 4 hardly dissipates from the periphery of the first motor 4 in passages other than the exhaust duct 54. This eliminates or reduces the thermal deformation of the members disposed in the periphery of the first motor 4 in a more effective manner. In the example illustrated in FIG. 2, the cover 6 defines an air flow passage from the first portion 41 toward the second portion 42 of the first motor 4 (more specifically, the first flow channel FP1, which extends from the first port 69a and reaches the second port 69b). In this case, while the first portion 41 of the first motor 4 is preferentially cooled, the entirety of the first motor 4 is also efficiently cooled.

In the example illustrated in FIG. 2, the first motor 4 is disposed in the internal region SP1 of the cover 6, and a flow channel cross-sectional area of the first flow channel FP1 is reduced by the area occupied by the first motor 4. In addition, since the flow cross-sectional area of the first flow channel FP1 is reduced, the speed of the air flowing through the first flow channel FP1 is increased. Thus, the first motor 4 is cooled in a more efficient manner by the air of a relatively high speed. Further, the cover 6 is also cooled efficiently by the air of a relatively high speed. Thus, transfer of the heat from the cover 6 to the members disposed outside the cover 6 is eliminated or minimized. In this manner, the thermal deformation of the members arranged outside the cover 6 is eliminated or minimized in a more effective manner.

In the example illustrated in FIG. 2, the cover 6 includes a plurality of walls 60 including a first wall 62a and a second wall 62b. In addition, the plurality of walls 60 constitute a housing that houses the first motor 4. In the example illustrated in FIG. 2, the first port 69a is formed on the second wall 62b. Also, a second port 69b is formed on the second wall 62b. In the example illustrated in FIG. 2, the second port 69b is disposed above the first port 69a. Thus, the cover 6 forms an air flow having a momentum component directed upward as a whole.

The plurality of walls 60 may include: side walls 62, which are disposed to face each other on side surfaces of the first motor 4; and a top wall 63, which covers a top portion 4t of the first motor 4.

In the example illustrated in FIG. 2, a lower end portion of the cover 6 is attached to a top portion 3t of the support base 3. The cover 6 may surround the first motor 4 and a part 31t of the support base 3 (more specifically, a part 31t of the top portion 3t of the support base 3).

In the example illustrated in FIG. 2, the cover 6 is made up of a plate material (more specifically, a metal plate material).

Alternatively, as illustrated in FIG. 5, the cover 6 may be omitted.

### (Partition Wall 11)

In the example illustrated in FIG. 1, the table drive 1A includes the partition wall 11. The partition wall 11 divides into a machining region in which a workpiece W is machined (in other words, a first region RG1 in which the table 21 for supporting the workpiece W is disposed) and a second region RG2 in which the first motor 4 and the cover 6 are disposed.

In a case where the table drive 1A includes the partition wall 11, unnecessary cutting chips generated by machining the workpiece W or a coolant liquid supplied to the workpiece W during machining is prevented from scattering from the first region RG1, which is the machining region, to the second region RG2. It is to be noted that the mist of the coolant liquid possibly enters the second region RG2 through a gap between the partition wall 11 and another member. In a case where the first motor 4 is surrounded by the cover 6, and when the air is supplied from the supply duct 51 to the internal space in the cover 6, the mist entering the internal space of the cover 6 is effectively eliminated or minimized.

The cover 6 may include a first wall 62a, which is disposed between the first motor 4 and the partition wall 11. In addition, in a case where the first wall 62a is disposed between the first motor 4 and the partition wall 11, transfer of the heat from the first motor 4 to the partition wall 11 is eliminated or minimized by the first wall 62a. In the example illustrated in FIG. 1, the first wall 62a is disposed to face the partition wall 11 via a space SP2. The space SP2 functions as an air layer between the first wall 62a and the partition wall 11, and the transfer of the heat from the first motor 4 to the partition wall 11 is eliminated or minimized in a more effective manner.

### (Dynamic Power Transfer Member 13)

In the example illustrated in FIG. 3, the first motor 4 transfers dynamic power to the support block 22 (more specifically, the first block 22a) of the table apparatus 2 via a mechanical dynamic power transfer mechanism M1.

In the example illustrated in FIG. 3, the table drive 1A includes a dynamic power transfer member 13, which transfers a driving force of the first motor 4 to the support block 22 of the table apparatus 2. In the example illustrated in FIG. 3, the power transfer member 13 includes: (1) a first shaft 131, which is coupled to the output shaft 44 of the first motor 4; and (2) a conversion member 133, which is coupled to the support block 22, and which converts rotation of the first shaft 131 about a central axis AX3 of the first shaft 131 into rotation of the support block 22 about the first axis AX1. It is to be noted that as the power transfer member 13 or the conversion member 133, any known member (examples including a shaft, a cam, a gear, and a transfer belt) is adoptable.

In the example illustrated in FIG. 3, the first shaft 131 includes a roller gear cam 131a (also referred to as a "globoidal cam"), and the conversion member 133 includes a plurality of cam followers 133a, which are disposed around the support block 22. Alternatively, the first shaft 131 may include a worm gear, and the support block 22 may include a gear that meshes with the worm gear. Further alternatively, the first shaft 131 may include a first bevel gear, and the support block 22 may include a second bevel gear that meshes with the first bevel gear.

In the example illustrated in FIG. 3, the first axis AX1, which is the rotational axis of the support block 22, is parallel to a plane perpendicular to the output shaft 44 of the first motor 4 (or the central axis AX3 of the first shaft 131). Alternatively, in a case where the dynamic power transfers between the first shaft 131 and the support block 22 using a plurality of general-purpose gears or a transfer belt, the first axis AX1, which is the rotational axis of the support block 22, may be parallel to the central axis AX3 of the first shaft 131.

### (Second Cooling Apparatus 15)

As illustrated in FIG. 6, the table drive 1A may include a second cooling apparatus 15, which cools the second motor 14 using a coolant. The second cooling apparatus 15 includes a coolant flow passage FL through which the coolant flows. For example, the coolant flow passage FL is disposed to pass through the support base 3. The second cooling apparatus 15 may include a pump 151, which circulates the coolant in the coolant flow passage FL.

In the example illustrated in FIG. 6, the first motor 4 is cooled by the air supplied from the supply duct 51, and the second motor 14 is cooled by the coolant flowing through the coolant flow passage FL. Thus, when compared with a case where both the first motor 4 and the second motor 14 are cooled by the coolant, the coolant flow passage FL is not complicated. For example, it is not necessary to provide a coolant flow passage for cooling the first motor 4 inside the support base 3, and thus the structure of the support base 3 is not complicated. In addition, since it is not necessary to provide the coolant flow passage for cooling the first motor 4 inside the support base 3, an increase in size of the support base 3 is eliminated or minimized.

In the example illustrated in FIG. 6, the second motor 14, which is disposed at a position closer to the table 21 than the first motor 4, is cooled by the coolant. This effectively eliminates or minimizes the thermal deformation of the table apparatus 2 due to the heat generation of the second motor 14. In addition, the first motor 4, which is disposed at a position farther from the table 21 than the second motor 14, is cooled by the air. Thus, thermal deformation of the support base 3 caused by heat generation of the first motor 4 is eliminated or minimized, while complication of the structure of the table drive 1A is eliminated or minimized.

### (Support Base 3)

In the example illustrated in FIG. 1, the support base 3 includes: a first support base 3a, which supports the first end portion 2a of the table apparatus 2 so that the first end portion 2a is tiltable; and a second support base 3b, which supports the second end portion 2b of the table apparatus 2 so that the second end portion 2b is tiltable. In addition, the first portion 41 of the first motor 4 is in contact with the first support base 3a. To be more specific, the first portion 41 of the first motor 4 is attached to the first support base 3a.

### (Base Structure 9)

In the example illustrated in FIG. 1, the machine tool 100A includes a base structure 9. The support base 3 (more specifically, the first support base 3a and the second support base 3b) is fixed to the base structure 9. A fixed part of the mover 103, which moves the machining head HD, may be fixed to the base structure 9. In the example illustrated in FIG. 1, the support base 3 is fixed to the base structure 9, and the cover 6, which surrounds the first motor 4, is fixed to the support base 3. In other words, the cover 6 is supported by the base structure 9 via the support base 3 so that the cover 6 is not movable relative to the base structure 9. Also, in the example illustrated in FIG. 1, the first portion 41 of the first motor 4 is fixed to the support base 3. In other words, the first portion 41 of the first motor 4 is supported by the base structure 9 via the support base 3 so that the first portion 41 is not movable relative to the base structure 9.

### (Duct 50)

Herein, a direction from the first support base 3a toward the second support base 3b is defined as a first direction DR1, and a direction opposite to the first direction DR1 is defined as a second direction DR2. In the example illustrated in FIG. 2, the supply duct 51 includes a first end portion 51a and a second end portion 51b. An air inlet opening OP1 is provided on the first end portion 51a, and an air outlet opening OP2 is provided on the second end portion 51b. In the example illustrated in FIG. 2, the air is taken into the supply duct 51 from the first end portion 51a of the supply duct 51, and the air is blown out of the second end portion 51b of the supply duct 51 toward the first portion 41 of the first motor 4. In the example illustrated in FIG. 2, the second end portion 51b is disposed further in the first direction DR1 than the first end portion 51a. Thus, the supply duct 51 as a whole forms the flow of the air having a momentum component in a direction along the first direction DR1.

In a plan view, the extending direction of the supply duct 51 may be parallel to the first direction DR1. Also, as illustrated in FIG. 1, the first end portion 51a of the supply duct 51 may be connected with a first opening portion E1, which is formed on the outer wall 108.

In the example illustrated in FIG. 2, the exhaust duct 54 includes a first end portion 54a and a second end portion 54b. An air inlet opening OP3 is provided on the first end portion 54a, and an air outlet opening OP4 is provided on the second end portion 54b. In other words, the air is taken into the exhaust duct 54 from the first end portion 54a of the exhaust duct 54, and the air is blown out of the second end portion 54b of the exhaust duct 54. In the example illustrated in FIG. 2, the second end portion 54b is disposed further in the second direction DR2 than the first end portion 54a. Thus, the exhaust duct 54 as a whole forms an air flow having a momentum component in a direction along the second direction DR2.

In the example illustrated in FIG. 2, the exhaust duct 54 is disposed above the supply duct 51. The exhaust duct 54 may be disposed directly on the supply duct 51. In this case, the size of the duct 50 in a plan view can be made compact.

In a plan view, the extending direction of the exhaust duct 54 may be parallel to the first direction DR1. Also, as illustrated in FIG. 1, the second end portion 54b of the exhaust duct 54 may be connected with a second opening portion E2, which is formed on the outer wall 108.

In the example illustrated in FIG. 2, an air flow passage having a substantially letter U shape is defined by the supply duct 51, the cover 6, and the exhaust duct 54. The air flow passage having a substantially letter U shape forms a flow of the air toward the first portion 41 of the first motor 4, a flow of the air from the first portion 41 of the first motor 4 toward the second portion 42 of the first motor 4, and a flow of the air away from the second portion 42 of the first motor 4 (see broken line arrows in FIG. 2). In addition, since the air flow passage has a letter U shape, the air flow passage as a whole is disposed compactly.

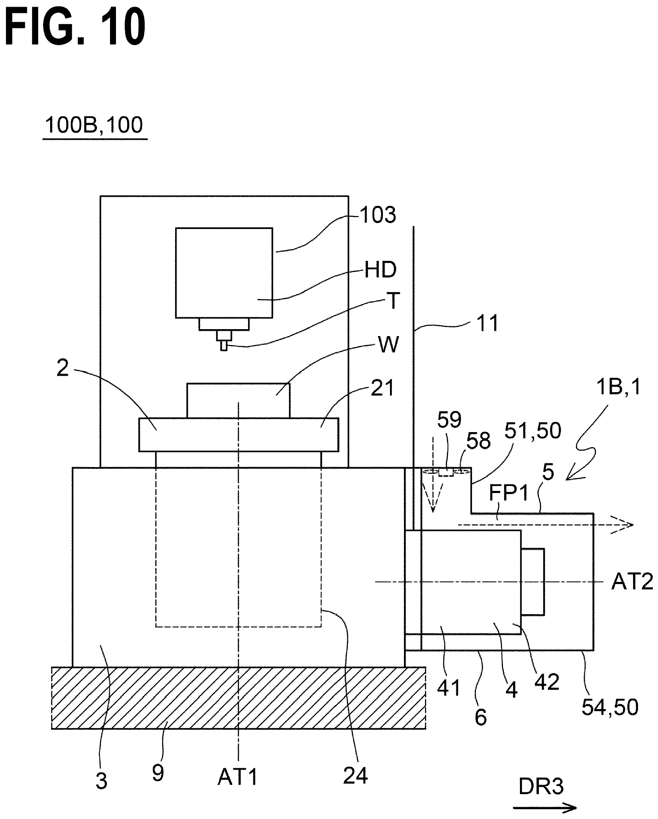

In the example described in FIG. 2, the supply duct 51 and the cover 6 are connected with each other so that the assembly of the supply duct 51 and the cover 6 has a substantially letter T shape. Alternatively, the supply duct 51 and the cover 6 may be connected with each other so that the assembly of the supply duct 51 and the cover 6 has a substantially letter L shape (see FIG. 10, if necessary).

### (Fan 58)

In the example illustrated in FIG. 2, a fan 58 is disposed in the supply duct 51 (more specifically, on the first end portion 51a of the supply duct 51). In this case, the fan 58 functions as an intake fan 58a, which takes the air into the supply duct 51. Alternatively or additionally, the fan 58 may be disposed in the exhaust duct 54 (more specifically, on the second end portion 54b of the exhaust duct 54). In this case, the fan 58 functions as a discharge fan 58b, which discharges the air from the exhaust duct 54 (see FIG. 5). It is to be noted that the type of the fan 58, the attachment method of the fan 58, and the arrangement of the fan 58 are not limited in an embodiment. In other words, any fan 58 may be adopted as long as the fan 58 is capable of generating a flow of the air in the duct 50.

### (Filter 57)

The table drive 1A may include a filter 57, which removes foreign matters such as dust from the air. In the example illustrated in FIG. 2, the filter 57 is disposed on the supply duct 51 (more specifically, on the first end portion 51a of the supply duct 51).

### (Modification of Arrangement of Duct 50)

Herein, a direction from the first portion 41 of the first motor 4 toward the second portion 42 of the first motor 4 is defined as a third direction DR3. In the example illustrated in FIG. 2, the extending direction of the supply duct 51 is substantially perpendicular to the third direction DR3. The extending direction of the exhaust duct 54 is substantially perpendicular to the third direction DR3.

Alternatively, as illustrated in FIG. 7, the extending direction of the exhaust duct 54 may be a direction along the third direction DR3. In addition, the direction from the first end portion 54a of the exhaust duct 54 toward the second end portion 54b of the exhaust duct 54 may be an upward direction.

In the example illustrated in FIG. 2, the exhaust duct 54 and the cover 6 are separate members, and the exhaust duct 54 is attached to the cover 6. Alternatively, as illustrated in FIG. 7, the cover 6, which surrounds the first motor 4, and an exhaust duct 54, which discharges the air from the periphery of the second portion 42 of the first motor 4, may be integrally formed. In other words, part of the exhaust duct 54 may function as the cover 6, which surrounds the first motor 4.

### (Arrangement of First Motor 4)

In the example illustrated in FIG. 2, the first motor 4 is disposed directly on the support base 3. In this case, it is possible to effectively utilize the space directly on the support base 3. In addition, the air of high temperature flows upward, and the air heated by the heat generated from the first motor 4 hardly flows toward the support base 3.

### (Modification of Arrangement of First Motor 4)

In the example illustrated in FIG. 2, the first portion 41 of the first motor 4 is in contact with the top portion 3t of the support base 3 (more specifically, the first support base 3a). Alternatively, as illustrated in FIG. 8, the first portion 41 of the first motor 4 may be in contact with a side portion of the support base 3 (more specifically, the first support base 3a).

In the example illustrated in FIG. 8, in a plan view, a direction from the first portion 41 of the first motor 4 toward the second portion 42 of the first motor 4 (in other words, the third direction DR3) is perpendicular to the first direction DR1. As illustrated in FIG. 8, in a plan view, the extending direction of the supply duct 51 may be parallel to the first direction DR1. Also, in a plan view, the extending direction of the exhaust duct 54 may be parallel to the first direction DR1.

As illustrated in FIG. 8, the outer wall 108 may include: a front wall 108a on which the doors 109 are disposed; side walls 108b; and a back wall 108c. The wall to which the first end portion 51a of the supply duct 51 is attached may be different from the wall on which the doors 109 are disposed (for example, the front wall 108a). In the example illustrated in FIG. 8, the first end portion 51a of the supply duct 51 is attached to one of the side walls 108b.

### (Mover 103)

In an example illustrated in FIG. 9, the mover 103 moves the machining head HD, and the mover 103 includes: a first mover 103a, which moves the machining head HD in a direction along X axis parallel to a horizontal plane; a second mover 103b, which moves the machining head HD in a direction along Y axis parallel to the horizontal plane; and a third mover 103c, which moves the machining head HD in a direction along Z axis perpendicular to the horizontal plane. In the example illustrated in FIG. 9, X axis is parallel to the first direction DR1, and Y axis is perpendicular to X axis direction.

In the example described in FIG. 9, the mover 103 moves the machining head HD, and the mover 103 includes: a first member 104a (for example, a saddle); a second member 105a (for example, a column); and a third member 106a. The first member 104a is supported by the base structure 9 so that the first member 104a is movable in the direction along X axis. The first mover 103a moves the first member 104a relative to the base structure 9 in the direction along X axis. The second member 105a is supported by the first member 104a so that the second member 105a is movable in the direction along Y axis. The second mover 103b moves the second member 105a relative to the first member 104a in the direction along Y axis. The third member 106a is supported by the second member 105a so that the third member 106a is movable in the direction along Z axis. The third mover 103c moves the third member 106a relative to the second member 105a in the direction along Z axis. The third member 106a includes the machining head HD (in other words, the machining head HD moves integrally with the third member 106a).

In the example illustrated in FIG. 9, the mover 103 is capable of moving the machining head HD three-dimensionally. Alternatively, the mover 103 may be a device that moves the machining head HD two-dimensionally or one-dimensionally.

### (Second Embodiment)

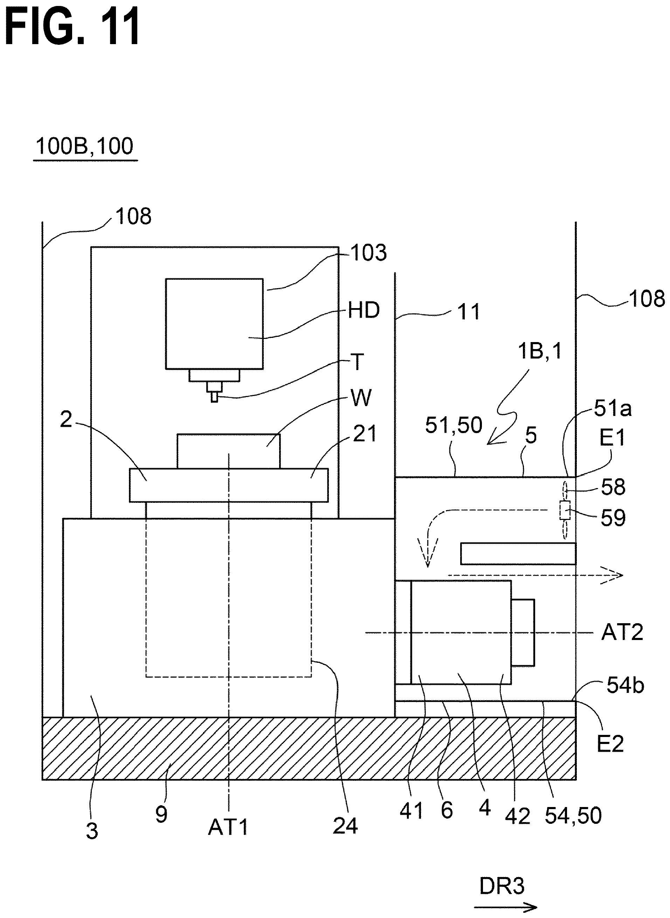

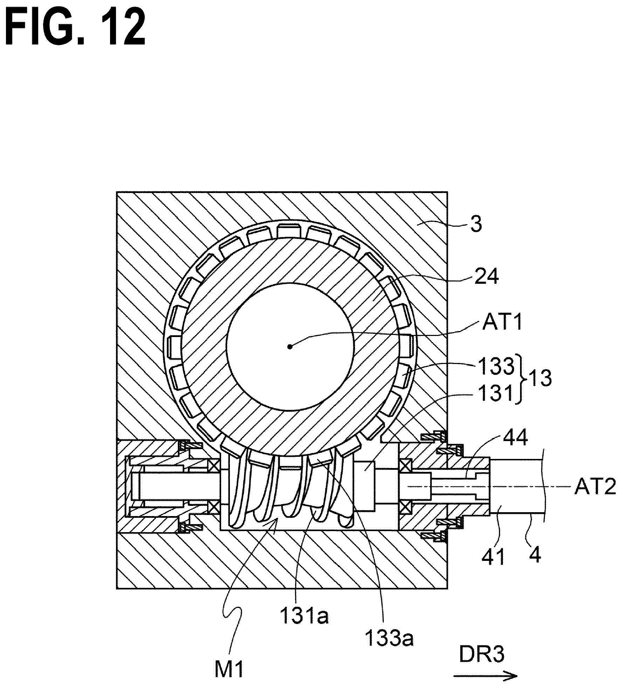

A table drive 1B and a machine tool 100B according to the second embodiment will be described, with reference to FIG. 10. FIG. 10 is a schematic illustration of the machine tool 100B according to the second embodiment. FIG. 11 is a schematic illustration of the machine tool 100B according to a modification of the second embodiment. FIG. 12 is a schematic illustration of an example of a mechanism for transferring dynamic power from the first motor 4 to the rotation body 24.

In the first embodiment, the example in which the first motor 4 in contact with the support base 3 tilts the table apparatus 2 about the first axis AX1 has been described. In the second embodiment, the first motor 4 in contact with the support base 3 rotates the rotation body 24, to which the table 21 is fixed, about a first axis AT1. The first axis AT1 is, for example, an axis parallel to a vertical direction.

In the second embodiment, differences from the first embodiment will be mainly described. On the other hand, in the second embodiment, repeated descriptions of the matters that have been described in the first embodiment will be omitted. Therefore, it is needless to say that the matters that have been described in the first embodiment are applicable to the second embodiment, even though they are not explicitly described in the second embodiment.

In an example illustrated in FIG. 10, the table drive 1B includes: (1) a table apparatus 2 including a table 21 for supporting a workpiece W, which is an object to be machined; (2) a support base 3, which supports the table apparatus 2; (3) a first motor 4 including a first portion 41 in contact with the support base 3, and a second portion 42, which is disposed at a position farther from the support base 3 than the first portion 41, and which moves the table apparatus 2 relative to the support base 3; and (4) a cooling apparatus 5, which cools the first motor 4. In addition, the cooling apparatus 5 includes: (5) a fan 58, which gives momentum to the air; (6) a supply duct 51, which supplies the air to the first portion 41 of the first motor 4; and (7) an exhaust duct 54, which discharges the air from the periphery of the second portion 42 of the first motor 4.

In addition, in the example illustrated in FIG. 10, in addition to the above-described table drive 1B, the machine tool 100B includes: a machining head HD, which supports a tool T for machining the workpiece W; and a mover 103, which moves the machining head HD.

From the foregoing configurations, the table drive 1B and the machine tool 100B according to the second embodiment respectively have the same effects as those of the table drive 1A and the machine tool 100A according to the first embodiment.

### (Optional and Additional Configurations)

Subsequently, optional and additional configurations that are adoptable in the table drive 1B and the machine tool 100B according to the second embodiment will be described with reference to FIGs. 10 to 12.

In the example described in FIG. 10, the table apparatus 2 includes: a table 21; and a rotation body 24, to which the table 21 is fixed. The support base 3 supports the rotation body 24 so that the rotation body 24 is rotatable about the first axis AT1. In addition, the first motor 4 rotates the rotation body 24, to which the table 21 is fixed, about the first axis AT1.

In the example described in FIG. 10, the table drive 1B includes a cover 6, which surrounds the first motor 4. In the example illustrated in FIG. 10, the cover 6, which surrounds the first motor 4, and the exhaust duct 54, which discharges the air from the periphery of the second portion 42 of the first motor 4, are integrally formed. In other words, part of the exhaust duct 54 functions as the cover 6, which surrounds the first motor 4. Alternatively, the exhaust duct 54 and the cover 6, which surrounds the first motor 4, may be separate members.

In an example illustrated in FIG. 12, the first axis AT1, which is the rotational axis of the rotation body 24, is parallel to a plane perpendicular to the output shaft 44 of the first motor 4 (or a central axis AT2 of a shaft 131).

In the example illustrated in FIG. 12, the first motor 4 transfers dynamic power to the rotation body 24 of the table apparatus 2 via a mechanical dynamic power transfer mechanism M1. To be more specific, the table drive 1B includes a dynamic power transfer member 13, which transfers a driving force of the first motor 4 to the rotation body 24 of the table apparatus 2. In the example illustrated in FIG. 12, the dynamic power transfer member 13 includes: (1) the first shaft 131, which is coupled to the output shaft 44 of the first motor 4; and (2) a conversion member 133, which is coupled to the rotation body 24, and which converts rotation of the first shaft 131 about the central axis AT2 of the first shaft 131 into rotation of the rotation body 24 about the first axis AT1. It is to be noted that as the dynamic power transfer member 13 or the conversion member 133, any known member (examples including a shaft, a cam, a gear, and a transfer belt) is adoptable.

In the example illustrated in FIG. 12, the first shaft 131 includes a roller gear cam 131a (also referred to as a "globoidal cam"), and the conversion member 133 includes a plurality of cam followers 133a, which are disposed around the rotation body 24. Alternatively, the first shaft 131 may include a worm gear, and the rotation body 24 may include a gear that meshes with the worm gear. Furthermore, alternatively, the first shaft 131 may include a first bevel gear, and the rotation body 24 may include a second bevel gear that meshes with the first bevel gear.

In the example illustrated in FIG. 10, a direction from the first portion 41 of the first motor 4 toward the second portion 42 of the first motor 4 (in other words, the third direction DR3) is a direction away from the table apparatus 2 and the support base 3. Also, a direction from the first portion 41 of the first motor 4 toward the second portion 42 of the first motor 4 (in other words, the third direction DR3) is a direction parallel to a horizontal plane.

In the example illustrated in FIG. 10, the machine tool 100B includes a base structure 9 to which the support base 3 is fixed. In the example illustrated in FIG. 10, the support base 3 is fixed to the base structure 9, and the cover 6, which surrounds the first motor 4, is fixed to the support base 3. Also, in the example illustrated in FIG. 10, the first portion 41 of the first motor 4 is fixed to the support base 3.

As illustrated in FIG. 11, a first end portion 51a of the supply duct 51 may be connected with a first opening portion E1 of an outer wall 108 of the machine tool 100B. In addition, a second end portion 54b of the exhaust duct 54 may be connected with a second opening portion E2 of the outer wall 108 of the machine tool 100B.

### (Third Embodiment)

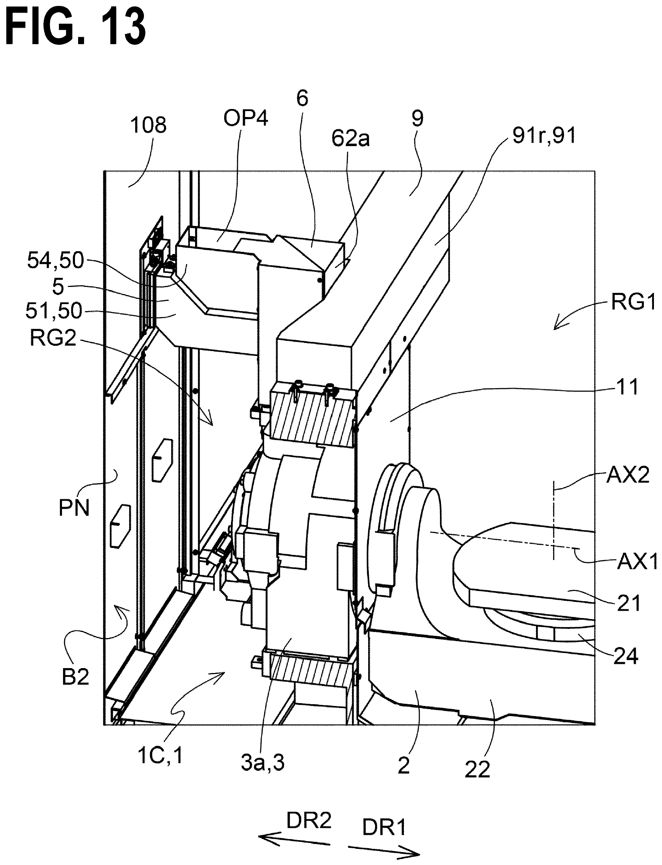

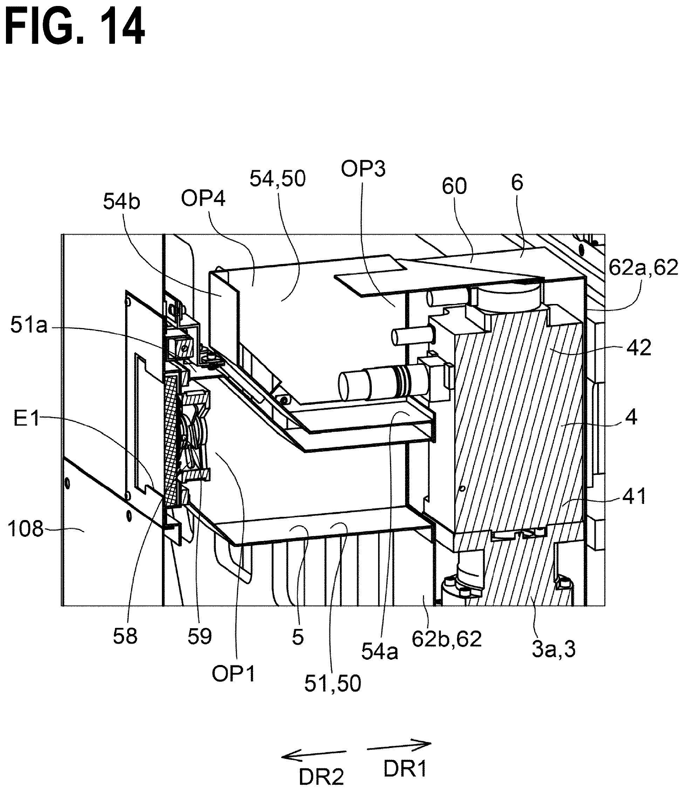

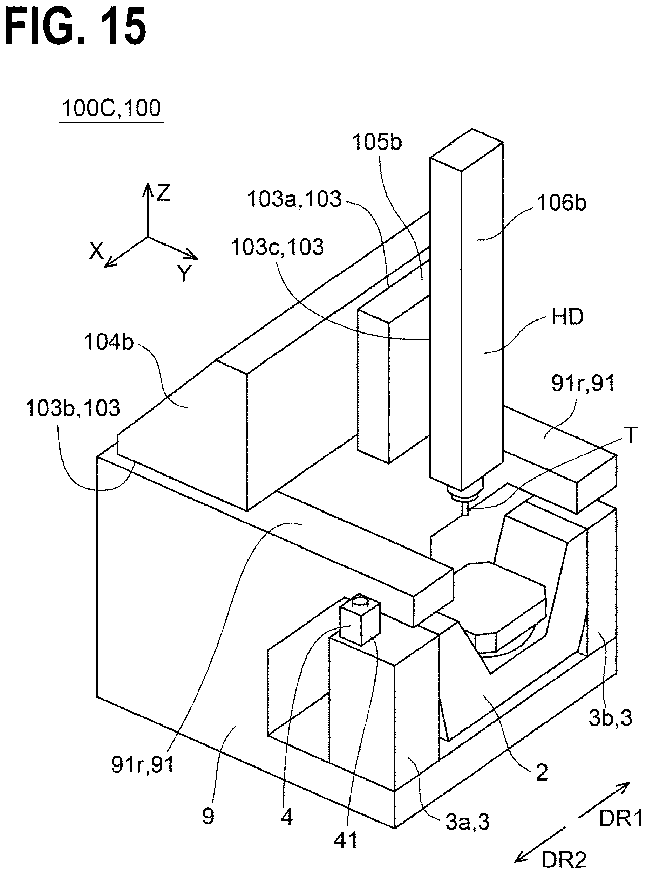

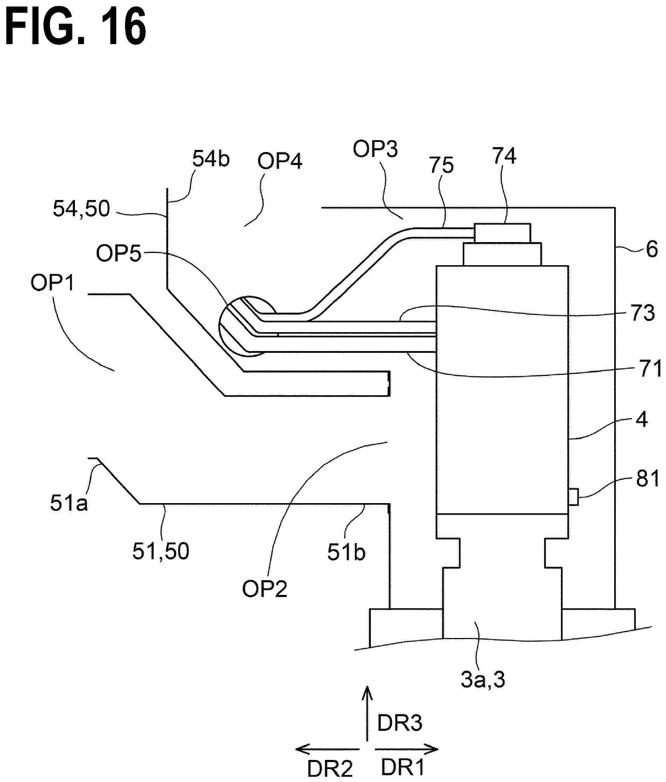

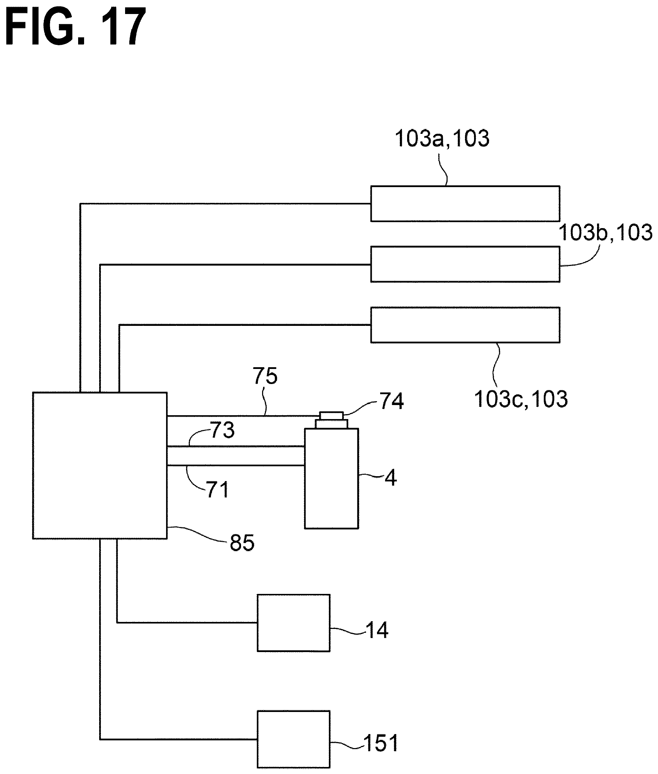

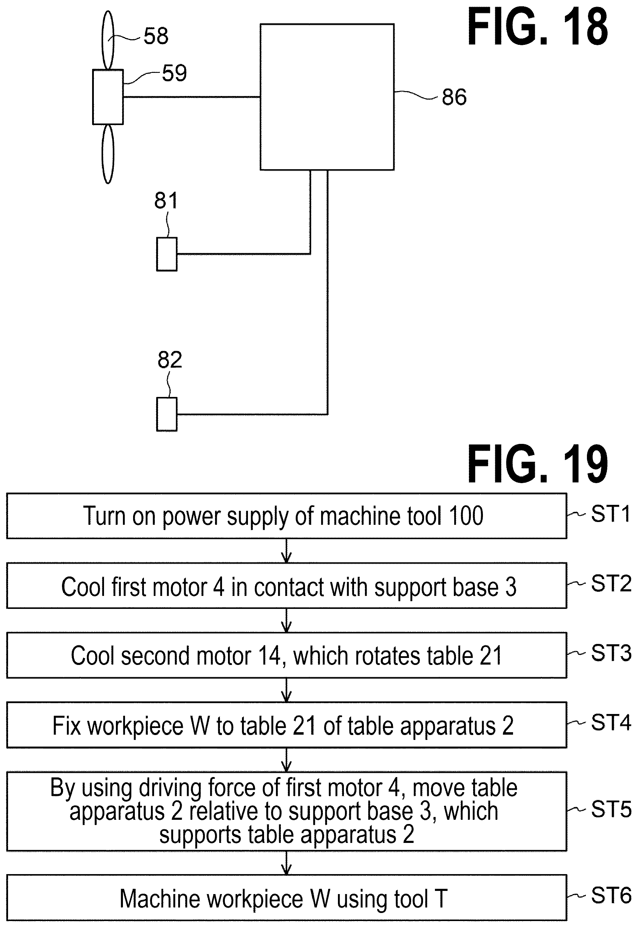

A table drive 1C and a machine tool 100C according to the third embodiment will be described with reference to FIGs. 13 to 18. FIG. 13 is a schematic illustration of part of the machine tool 100C according to the third embodiment. FIG. 14 is a schematic cross-sectional view of part of the machine tool 100C according to the third embodiment. FIG. 15 is a schematic perspective view for describing an example of a mover 103, which moves a machining head HD. It is to be noted that in FIG. 15, illustrations of a duct 50, a cover 6, a partition wall 11, and an outer wall 108 are omitted. FIG. 16 is a schematic illustration of an example of the arrangements of a supply duct 51, an exhaust duct 54, and the cover 6. FIG. 17 is a schematic illustration of an example of a connection relationship between a controller 85 and devices to be controlled. FIG. 18 is a schematic illustration of how the controller 86 is capable of controlling a fan motor 59, based on a signal from a temperature sensor 81.

In the third embodiment, differences from the first embodiment and the second embodiment will be mainly described. On the other hand, in the third embodiment, repeated descriptions of the matters that have been described in the first embodiment or the second embodiment will be omitted. Therefore, it is needless to say that the matters that have been described in the first embodiment or the second embodiment are applicable to the third embodiment, even though they are not explicitly described in the third embodiment. Conversely, matters to be described in the third embodiment are applicable to the first embodiment or the second embodiment.

In an example illustrated in FIGs. 13 and 14, the table drive 1C includes: (1) a table apparatus 2 including a table 21 for supporting a workpiece W, which is an object to be machined; (2) a support base 3, which supports the table apparatus 2; (3) a first motor 4 including a first portion 41 in contact with the support base 3, and a second portion 42, which is disposed at a position farther from the support base 3 than the first portion 41, and which moves the table apparatus 2 relative to the support base 3; and (4) a cooling apparatus 5, which cools the first motor 4. In addition, the cooling apparatus 5 includes: (5) a fan 58, which gives momentum to the air; (6) a supply duct 51, which supplies the air to the first portion 41 of the first motor 4; and (7) an exhaust duct 54, which discharges the air from the periphery of the second portion 42 of the first motor 4.

In addition, in an example illustrated in FIG. 15, in addition to the above-described table drive 1C, the machine tool 100C includes: a machining head HD, which supports a tool T for machining a workpiece; and a mover 103, which moves the machining head HD.

From the foregoing configurations, the table drive 1C and the machine tool 100C according to the third embodiment respectively have the same effects as those of the table drive 1A and the machine tool 100A according to the first embodiment.

### (Optional and Additional Configurations)

Subsequently, optional and additional configurations that are adoptable in the table drive 1C and the machine tool 100C according to the third embodiment will be described with reference to FIGs. 13 to 18. In the table drive 1C and the machine tool 100C according to the third embodiment, the optional and additional configurations that have been described in the first embodiment are adoptable. Also, in the table drive 1C and the machine tool 100C according to the third embodiment, the optional and additional configurations that have been described in the second embodiment are adoptable.

### (Tilting of Table Apparatus 2)

In an example illustrated in FIG. 13, the support base 3 supports the table apparatus 2 so that the table apparatus 2 is tiltable about the first axis AX1. To be more specific, the table apparatus 2 includes a support block 22, which directly or indirectly supports the table 21, and the support base 3 supports the support block 22 so that the support block 22 is tiltable about the first axis AX1. The support block 22 is made up of an assembly of a plurality of component parts.

The mechanism in which the first motor 4 tilts the table apparatus 2 (more specifically, the support block 22) about the first axis AX1 has already been described in the first embodiment (see FIG. 3, if necessary). Therefore, a repeated description of the mechanism in which the first motor 4 tilts the table apparatus 2 (more specifically, the support block 22) about the first axis AX1 will be omitted.

As illustrated in FIG. 13, the table apparatus 2 may include a rotation body 24, to which the table 21 is fixed. The rotation body 24 is supported by the support block 22 so that the rotation body 24 is rotatable about a second axis AX2. The table apparatus 2 also includes a second motor 14 (see FIG. 4), which rotates the rotation body 24 about the second axis AX2.

The mechanism in which the second motor 14 rotates the rotation body 24 about the second axis AX2 has already been described in the first embodiment (see FIG. 4, if necessary). Therefore, a repeated description of the mechanism in which the second motor 14 rotates the rotation body 24 about the second axis AX2 will be omitted.

### (Cover 6)

In an example illustrated in FIG. 14, the table drive 1C includes a cover 6, which surrounds the first motor 4. The cover 6 has been described in the first embodiment, and the repeated description of the cover 6 will be omitted.

### (Partition Wall 11)

In the example described in FIG. 13, the table drive 1C includes a partition wall 11, which divides into a machining region in which a workpiece is machined (in other words, a first region RG1 in which the table 21 for supporting the workpiece W is disposed) and a second region RG2 in which the first motor 4 and the cover 6 are disposed. Since the partition wall 11 has been described in the first embodiment, the repeated description of the partition wall 11 will be omitted.

### (Second Cooling Apparatus 15)

As illustrated in FIG. 6, the table drive 1A may include a second cooling apparatus 15, which cools the second motor 14 using a coolant. Since the second cooling apparatus 15 has been described in the first embodiment, the repeated description of the second cooling apparatus 15 will be omitted.

### (Support Base 3)

In the example described in FIG. 15, the support base 3 includes: a first support base 3a, which supports a first end portion of the table apparatus 2 so that the first end portion is tiltable; and a second support base 3b, which supports a second end portion of the table apparatus 2 so that the second end portion is tiltable. In addition, a first portion 41 of the first motor 4 is in contact with the first support base 3a. To be more specific, the first portion 41 of the first motor 4 is attached to the first support base 3a. As illustrated in FIG. 13, a cover 6, which surrounds the first motor 4, may be fixed to the support base 3.

### (Base Structure 9)

In the example illustrated in FIG. 15, the machine tool 100C includes a base structure 9. The support base 3 (more specifically, the first support base 3a and the second support base 3b) is fixed to the base structure 9.

### (Duct 50)

In an example illustrated in FIG. 16, the supply duct 51 includes a first end portion 51a and a second end portion 51b. An air inlet opening OP1 is provided on the first end portion 51a, and an air outlet opening OP2 is provided on the second end portion 51b. In the example illustrated in FIG. 16, the second end portion 51b is disposed further in the first direction DR1 than the first end portion 51a. Therefore, the supply duct 51 as a whole forms a flow of the air having a momentum component in a direction along the first direction DR1. In the example illustrated in FIG. 16, the second end portion 51b is lower in height than the first end portion 51a. Alternatively, the second end portion 51b may be lower in height than the first end portion 51a, or both end portions may be almost equal in height to each other.

In a plan view, the extending direction of the supply duct 51 may be parallel to the first direction DR1. In addition, as illustrated in FIG. 14, the first end portion 51a of the supply duct 51 may be connected with a first opening portion E1, which is formed on an outer wall 108.

In the example illustrated in FIG. 14, the exhaust duct 54 includes a first end portion 54a and a second end portion 54b. An air inlet opening OP3 is provided on the first end portion 54a, and an air outlet opening OP4 is provided on the second end portion 54b. In the example illustrated in FIG. 14, the second end portion 54b is disposed further in the second direction DR2 than the first end portion 54a. Therefore, the exhaust duct 54 as a whole forms a flow of the air having a momentum component in a direction along the second direction DR2.

In the example illustrated in FIG. 14, the exhaust duct 54 is disposed above the supply duct 51. The exhaust duct 54 may be disposed directly on the supply duct 51. In this case, the size of the duct 50 in a plan view can be made compact.

In the example illustrated in FIG. 14, an air flow passage having a substantially letter U shape is defined by the supply duct 51, the cover 6, and the exhaust duct 54. The air flow passage having a substantially letter U shape forms a flow of the air toward the first portion 41 of the first motor 4, a flow of the air from the first portion 41 of the first motor 4 toward the second portion 42 of the first motor 4, and a flow of the air away from the second portion 42 of the first motor 4.

In the example illustrated in FIG. 14, the air inlet opening OP1 of the supply duct 51 is a lateral side opening. In a case where the air inlet opening OP1 of the supply duct 51 is the lateral side opening, the first end portion 51a (in other words, an end portion closer to the air inlet opening OP1) of the supply duct 51 is easily attached to the outer wall 108 (more specifically, a side wall 108b). In the example illustrated in FIG. 14, an air outlet opening OP4 of the exhaust duct 54 is an upper opening. In a case where the air outlet opening OP4 of the exhaust duct 54 is the upper opening, warm air blown out of the air outlet opening OP4 hardly returns to a space below the exhaust duct 54.

In the example illustrated in FIG. 13, the air outlet opening OP4 of the exhaust duct 54 is disposed on an inner side than the outer wall 108 in a plan view. In the case where the air outlet opening OP4 is disposed on the inner side than the outer wall 108, it is possible to shorten the exhaust duct 54. In addition, a worker located on an outer side than the outer wall 108 will not feel uncomfortable with the air blown out of the air outlet opening OP4.

In the example illustrated in FIG. 13, the air outlet opening OP4 of the exhaust duct 54 is disposed between the partition wall 11 and the outer wall 108 in a plan view. Also, in the example illustrated in FIG. 13, the air outlet opening OP4 is an upper opening. In this case, the warm air blown out of the air outlet opening OP4 is hardly directed toward the support base 3.

### (Opening B2 for Inspection and Panel PN)

As illustrated in FIG. 13, on the outer wall 108, an opening B2 for maintenance or inspection of devices disposed in a second region RG2 between the outer wall 108 and the partition wall 11 may be formed. The machine tool 100C may also include a panel PN, which is capable of opening and closing the opening B2. In the example illustrated in FIG. 13, the panel PN is attached to the outer wall 108 so as to close the opening B2.

### (Mover 103)

In the example illustrated in FIG. 15, the mover 103, which moves the machining head HD, includes: a first mover 103a, which moves a machining head HD in a direction along X axis parallel to a horizontal plane; a second mover 103b, which moves the machining head HD in a direction along Y axis parallel to the horizontal plane; and a third mover 103c, which moves the machining head HD in a direction along Z axis perpendicular to the horizontal plane. In the example illustrated in FIG. 15, X axis is parallel to the first direction DR1, and Y axis is perpendicular to X axis direction.

In the example described in FIG. 15, the mover 103 moves the machining head HD, and the mover 103 includes: a first member 104b; a second member 105b; and a third member 106b. The first member 104b is supported by the base structure 9 so that the first member 104b is movable in a direction along Y axis. The second mover 103b moves the first member 104b relative to the base structure 9 in the direction along Y axis. The second member 105b is supported by the first member 104b so that the second member 105b is movable in a direction along X axis. The first mover 103a moves the second member 105b relative to the first member 104b in the direction along X axis. The third member 106b is supported by the second member 105b so that the third member 106b is movable in a direction along Z axis. The third mover 103c moves the third member 106b relative to the second member 105b in the direction along Z axis. The third member 106b includes the machining head HD.

In the example illustrated in FIG. 15, the mover 103 is capable of moving the machining head HD three-dimensionally. Alternatively, the mover 103 may be a device that moves the machining head HD two-dimensionally or one-dimensionally.

### (Base Structure 9)

The machine tool 100C includes a base structure 9. In the example described in FIG. 15, the base structure 9 supports structures (104b, 105b, 106b) including the machining head HD so that the structures are movable. As illustrated in FIG. 13, the cover 6, which surrounds the first motor, may include a first wall 62a. The first wall 62a is disposed between the first motor and the base structure 9. The first motor is surrounded by the cover 6, and the first motor and the base structure 9 are isolated from each other by the first wall 62a, so that heat generated from the first motor hardly transfers to the base structure 9. Thus, thermal deformation of the base structure 9 is eliminated or minimized.

In the example illustrated in FIG. 15, the base structure 9 includes a guide member 91 (more specifically, a guide rail 91r), which guides the movement of the first member 104b of the mover 103. In addition, in the example illustrated in FIG. 13, the cover 6 surrounds the first motor, and the cover 6 includes the first wall 62a. The first wall 62a is disposed between the first motor and the guide member 91. In this case, the heat generated from the first motor hardly transfers to the guide member 91. Thus, thermal deformation of the guide member 91 is eliminated or minimized, and a decrease in positional accuracy of the machining head HD is eliminated or minimized.

### (Electric Power Supply Line 71, Control Line 73, Signal Line 75, and Controller 85)

In an example illustrated in FIG. 16, the table drive 1C includes an electric power supply line 71, which supplies electric power to the first motor 4. Additionally, the table drive 1C may include a control line 73 (for example, a control line for activating an electromagnetic brake of the first motor 4), which transmits, to the first motor 4, a control command for stopping the rotation of a rotating portion of the first motor 4. Alternatively or additionally, the table drive 1C may include a signal line 75, which transmits, to the controller 85, a signal from an encoder 74 provided in the first motor 4 (more specifically, a signal indicating the rotational phase of the first motor 4). In an example illustrated in FIG. 17, the controller 85 controls the first motor 4 and the mover 103 (for example, the above-described first mover 103a, the above-described second mover 103b, and the above-described third mover 103c), which moves the machining head HD. Additionally, the controller 85 may control the second motor 14 and a pump 151, which circulates the coolant.

As illustrated in FIG. 16, at least one of the above-described electric power supply line 71, the above-described control line 73, and the above-described signal line 75 may be disposed to pass through an opening OP5, which is formed on at least one of the supply duct 51 and the exhaust duct 54. In the example illustrated in FIG. 16, the above-described electric power supply line 71 is disposed to pass through the opening OP5, which is formed on the exhaust duct 54. Additionally, the above-described control line 73 and/or the above-described signal line 75 may be disposed to pass through the opening OP5, which is formed on the exhaust duct 54.

In a case where the first motor 4 is surrounded by the cover 6 and the electric power supply line 71, the control line 73, and the signal line 75 are each disposed to pass through the opening OP5, which is formed on the duct 50, a connection portion between the electric power supply line 71 and the first motor 4, a connection portion between the control line 73 and the first motor 4, and a connection portion between the signal line 75 and the first motor 4 are protected by the duct 50 and the cover 6.

### (Temperature Sensor 81 and Controller 85)

As illustrated in FIG. 16, the table drive 1C may include a temperature sensor 81. The temperature sensor 81 detects the temperature of the first motor 4, the temperature of the internal space of the cover 6, or the temperature of the internal space of the exhaust duct 54.

As illustrated in FIG. 18, the table drive 1C may include a controller 86, which controls a fan motor 59. The controller 86, which controls the fan motor 59, may be an identical one to the controller 85, which controls the first motor 4. In other words, one controller 85 may control the first motor 4 and the fan motor 59. The controller 86 may control the fan motor 59, based on a signal received from the temperature sensor 81. For example, the controller 86 may control ON/OFF of the fan motor 59, based on the signal received from the temperature sensor 81. Alternatively or additionally, the controller 86 may control the rotational speed of the fan motor 59, based on the signal received from the temperature sensor 81.

For example, the controller 86 may switch the fan motor 59 from OFF to ON in accordance with the temperature detected by the temperature sensor 81 exceeding a first threshold value TH1. Alternatively or additionally, the controller 86 may increase the rotational speed of the fan motor 59 in accordance with the temperature detected by the temperature sensor 81 exceeding a second threshold value TH2. In addition, the controller 86 may switch the fan motor 59 from ON to OFF in accordance with the temperature detected by the temperature sensor 81 becoming equal to or lower than a third threshold value TH3. Alternatively or additionally, the controller 86 may decrease the rotational speed of the fan motor 59 in accordance with the temperature detected by the temperature sensor 81 becoming equal to or lower than a fourth threshold value TH4.

Alternatively, the controller 86 may switch the fan motor 59 from OFF to ON in accordance with a value obtained by subtracting a reference temperature from the temperature detected by the temperature sensor 81 exceeding a fifth threshold value TH5. It is to be noted that the reference temperature may be a temperature that has been detected by the temperature sensor 81 before the first motor 4 is driven. Alternatively, the reference temperature may be a temperature detected by a second temperature sensor 82, which is disposed at any reference position (for example, a position in the vicinity of the air inlet opening of the supply duct 51).

Alternatively or additionally, the controller 86 may increase the rotational speed of the fan motor 59 in accordance with a value obtained by subtracting the above-described reference temperature from the temperature detected by the temperature sensor 81 exceeding a sixth threshold value TH6.

In addition, the controller 86 may switch the fan motor 59 from ON to OFF in accordance with a value obtained by subtracting the above-described reference temperature from the temperature detected by the temperature sensor 81 becoming equal to or lower than a seventh threshold value TH7. Alternatively or additionally, the controller 86 may decrease the rotational speed of the fan motor 59 in accordance with a value obtained by subtracting the above-described reference temperature from the temperature detected by the temperature sensor 81 becoming equal to or lower than an eighth threshold value TH8.

Alternatively, the fan motor 59 may be constantly driven while the machine tool 100C is in operation or while the first motor 4 is being driven.

### (Workpiece Machining Method)

A workpiece machining method according to an embodiment will be described with reference to FIGs. 1 to 19. FIG. 19 is a flowchart illustrating an example of a workpiece machining method according to an embodiment.

The workpiece machining method according to an embodiment is performed by using the machine tool 100 (for example, the machine tool 100A according to the first embodiment, the machine tool 100B according to the second embodiment, the machine tool 100C according to the third embodiment, or another machine tool).

In a first step ST1, the power supply of the machine tool 100 is turned ON. The first step ST1 is an activation step of the machine tool.

In a second step ST2, the first motor 4 in contact with the support base 3 is cooled. The second step ST2 is a first cooling step. The first cooling step (the second step ST2) may start at the same time when the power supply of the machine tool 100 is turned ON. Alternatively, the first cooling step (the second step ST2) may start in accordance with the temperature detected by the temperature sensor 81 exceeding the first threshold value TH1. For example, the first cooling step (the second step ST2) may start in accordance with the temperature detected by the temperature sensor 81 exceeding the first threshold value TH1 during or after a moving step (a fifth step ST5) to be described later and/or a workpiece machining step (a sixth step ST6) to be described later. Further alternatively, the first cooling step (the second step ST2) may start in accordance with a value obtained by subtracting the reference temperature from the temperature detected by the temperature sensor 81 becoming higher than the fifth threshold value TH5. For example, the first cooling step (the second step ST2) may start in accordance with a value obtained by subtracting the reference temperature from the temperature detected by the temperature sensor 81 becoming higher than the fifth threshold value TH5 during or after the moving step (the fifth step ST5) to be described later and/or the workpiece machining step (the sixth step ST6) to be described later.

The first cooling step (the second step ST2) includes: (1) giving momentum to the air using the fan 58; (2) supplying the air from the supply duct 51 to the first portion 41 of the first motor 4; (3) causing the air to flow from the first portion 41 of the first motor 4 toward the second portion 42 of the first motor 4 in a direction away from the support base 3 so as to cool the first motor 4 using the air; and (4) discharging the air from the periphery of the second portion 42 of the first motor 4 through the exhaust duct 54.

Additionally, the workpiece machining method according to an embodiment may include a second cooling step of cooling the second motor 14, which rotates the table 21 about the second axis AX2. The second cooling step (a third step ST3) may be performed simultaneously with the first cooling step (the second step ST2). In the example illustrated in FIG. 6, the second motor 14, which is provided on the table apparatus 2, is cooled by using a coolant, and the first motor 4 in contact with the support base 3 is cooled by using the air. In this case, the thermal deformation of the table apparatus 2 is effectively eliminated or minimized by cooling the second motor 14 using the coolant. In addition, the first motor 4 is cooled by the air, and thus the thermal deformation of the support base 3 is eliminated or minimized at low cost and with energy saving.

The first cooling step (the second step ST2) may include causing the air to flow from the first portion 41 of the first motor 4 toward the second portion 42 of the first motor 4 in a region between the first motor 4 and the cover 6, which surrounds the first motor 4. The air flows through a relatively narrow region between the first motor 4 and the cover 6, and thus both the first motor 4 and the cover 6 are effectively cooled. Therefore, the thermal deformation of the member disposed outside the cover 6 that is caused by the heat generated from the first motor 4 is eliminated or minimized effectively.

In the first cooling step (the second step ST2), the direction from the first portion 41 of the first motor 4 toward the second portion 42 of the first motor 4 may be an upward direction (see FIGs. 1 and 14), or may be a direction away from the support base 3 (more specifically, the first support base 3a) in a plan view (see FIG. 8).

In a fourth step ST4, the workpiece W is fixed to the table 21 of the table apparatus 2. The fourth step ST4 is a workpiece fixing step. The workpiece fixing step (the fourth step ST4) may be performed after the above-described first cooling step (the second step ST2) starts, or may be performed before the above-described first cooling step (the second step ST2) starts.

In a fifth step ST5, the table apparatus 2 is moved relative to the support base 3, which supports the table apparatus 2, by using the driving force of the first motor 4. The fifth step ST5 is a moving step.

The moving step (the fifth step ST5) may include tilting the table apparatus 2 about the first axis AX1. In the examples described in FIGs. 1 and 13, the table apparatus 2 is tilted by the driving force of the first motor 4. The first axis AX1 is, for example, an axis parallel to a horizontal plane. The tilting of the table apparatus 2 may include rotating the support block 22 about the first axis AX1 with respect to the support base 3.

Alternatively or additionally, the moving step (the fifth step ST5) may include rotating the table 21.

In the example described in FIG. 6, the table 21 is rotated using the driving force of the second motor 14, which is different from the first motor 4. In the example illustrated in FIG. 6, the second motor 14 rotates the rotation body 24, to which the table 21 is fixed, about the second axis AX2 with respect to the support block 22. The second axis AX2 is, for example, an axis perpendicular to a top surface of the table 21.

In the example illustrated in FIG. 10, the table 21 is rotated using the driving force of the first motor 4. In the example illustrated in FIG. 10, the first motor 4 rotates the rotation body 24, to which the table 21 is fixed, about the first axis AT1 with respect to the support base 3. The first axis AT1 is, for example, an axis perpendicular to a horizontal plane. In the example illustrated in FIG. 10, the first axis AT1 is an axis perpendicular to the top surface of the table 21.

Alternatively or additionally, the moving step (the fifth step ST5) may include linearly moving the table apparatus 2.

In a sixth step ST6, the workpiece W is machined using the tool T. The sixth step ST6 is a workpiece machining step. The workpiece machining step (the sixth step ST6) is performed by moving the tool T relative to the workpiece W. Such a relative movement is made by using the mover 103, which moves the machining head HD. Alternatively or additionally, the relative movement may be made by using the above-described first motor 4 and/or the above-described second motor 14.

In the workpiece machining method according to an embodiment, the air is supplied to the first portion 41 of the first motor 4 by the supply duct 51, so that the first portion 41 of the first motor 4 is effectively cooled. Therefore, the heat generated from the first motor 4 is prevented from transferring from the first portion 41 to the support base 3, or such transfer of the heat is eliminated or minimized. In addition, in the workpiece machining method according to an embodiment, the air flows from the first portion 41 of the first motor 4 toward the second portion 42 of the first motor 4. Thus, the air that has been used for cooling the first portion 41, which is close to the support base 3, is also used for cooling the second portion 42 of the first motor 4. Further, the direction from the first portion 41 of the first motor 4 toward the second portion 42 of the first motor 4 is a direction away from the support base 3. Thus, the air, the temperature of which is increased by contact with the first motor 4, is prevented from moving toward the support base 3, or such a movement of the air is eliminated or minimized.

In the workpiece machining method according to the embodiments, the transfer of the heat from the first motor 4 to the support base 3 via the first portion 41 or via the air is eliminated or minimized, so that the thermal deformation of the support base 3 and the table apparatus 2 is eliminated or minimized. Thus, degradation, occurring along with an increase in use time of the first motor 4, of the positional accuracy of the workpiece W, which is supported by the table apparatus 2, is eliminated or minimized. In addition, since the degradation of the positional accuracy of the workpiece W is eliminated or minimized, degradation of the machining accuracy of the workpiece W is also eliminated or minimized.

The present invention is not limited to the above-described embodiments or modifications, and it is apparent that each embodiment or each modification can be appropriately modified or changed within the scope of the appended claims, which define the present invention.

### Description of Reference Numerals

1, 1A, 1B, 1C ... Table drive, 2 ... Table apparatus, 2a ... First end portion, 2b ... Second end portion, 3 ... Support base, 3a ... First support base, 3b ... Second support base, 3t ... Top portion, 4 ... First motor, 4t ... Top portion, 5 ... Cooling apparatus, 6 ... Cover, 9 ... Base structure, 11 ... Partition wall, 13 ... Dynamic power transfer member, 14 ... Second motor, 15 ... Second cooling device, 21 ... Table, 22 ... Support block, 22a ... First block, 22b ... Second block, 22c ... Third block, 14 ... Rotation body, 31t ... Part of top portion of support base, 41 ... First portion of first motor, 41a ... First end portion of first motor, 42 ... Second portion of first motor, 42a ... Second end portion of first motor, 44 ... Output shaft, 50 ... Duct, 51 ... Supply duct, 51a ... First end portion, 51b ... Second end portion, 54 ... Exhaust duct, 54a ... Frist end portion, 54b ... Second end portion, 57 ... Filter, 58 ... Fan, 58a ... Intake fan, 58b ... Exhaust fan, 59 ... Fan motor, 60 ... Wall, 62 ... Side wall, 62a ... First wall, 62b ... Second wall, 63 ... Top wall, 69a ... First port, 69b ... Second port, 71 ... Electric power supply line, 73 ... Control line, 74 ... Encoder, 75 ... Signal line, 81 ... Temperature sensor, 82 ... Second temperature sensor, 85 ... Controller, 86 ... Controller, 91 ... Guide member, 91r ... Guide rail, 100, 100A, 100B, 100C ... Machine tool, 103 ... Mover, 103a ... First mover, 103b ... Second mover, 103c ... Third mover, 104a ... First member, 104b ... First member, 105a ... Second member, 105b ... Second member, 106a ... Third member, 106b ... Third member, 108 ... Outer wall, 108a ... Front wall, 108b ... Side wall, 108c ... Back wall, 109 ... Door, 131 ... First shaft, 131a ... Roller gear cam, 133 ... Conversion member, 133a ... Cam follower, 144 ... Output shaft, 151 ... Pump, B1 ... Opening, B2 ... Opening, E1 ... First opening portion, E2 ... Second opening portion, FL ... Coolant passage, FP1 ... First flow channel, HD ... Machining head, M1 ... Dynamic power transfer mechanism, M2 ... Dynamic power transfer mechanism, OP1 ... Air inlet opening, OP2 ... Air outlet opening, OP3 ... Air inlet opening, OP4 ... Air outlet opening, OP5 ... Opening, PN ... Panel, RG1 ... First region, RG2 ... Second region, SP1 ... Internal region, SP2 ... Space, T ... Tool, W ... Workpiece

## Claims

1. A table drive (1, 1A, 1B, 1C) comprising:
a table apparatus (2) comprising a table (21) that is configured to support a workpiece (W);
a support base (3, 3a, 3b) that supports the table apparatus (2);
a first motor (4) comprising a first portion (41) in contact with the support base (3, 3a, 3b) and a second portion (42) disposed at a position farther from the support base (3, 3a, 3b) than the first portion (41), the first motor (4) being configured to move the table apparatus (2) relative to the support base (3, 3a, 3b); and
a cooling apparatus (5) configured to cool the first motor (4),
**characterised in that** the cooling apparatus (5) comprises:
a fan (58) configured to give momentum to air;
a supply duct (51) configured to supply the air to the first portion (41) of the first motor (4); and
an exhaust duct (54) configured to discharge the air from a periphery of the second portion (42) of the first motor (4).

2. The table drive (1, 1A, 1B, 1C) according to claim 1,
wherein the table apparatus (2) comprises a support block (22) that supports the table (21) either directly or indirectly, and
wherein the first motor (4) is a motor configured to tilt the support block (22).

3. The table drive (1, 1A, 1B, 1C) according to claim 1 or 2, comprising
a cover (6) that surrounds the first motor (4),
wherein the cover (6) defines an air flow passage (FP1) from the first portion (41) of the first motor (4) toward the second portion (42) of the first motor (4).

4. The table drive (1, 1A, 1B, 1C) according to claim 3, further comprising
a partition wall (11) that divides into a first region (RG1) in which the table (21) is disposed and a second region (RG2) in which the first motor (4) and the cover (6) are disposed,
wherein the cover (6) comprises a first wall (62a) disposed between the first motor (4) and the partition wall (11).

5. The table drive (1, 1A, 1B, 1C) according to claim 3 or 4,
wherein the supply duct (51), the cover (6), and the exhaust duct (54) define an air flow passage having a substantially letter U shape.

6. The table drive (1, 1A, 1B, 1C) according to one of claims 3 to 5,
wherein the supply duct (51) and the cover (6) are connected with each other for an assembly of the supply duct (51) and the cover (6) to have either a substantially letter T shape or a substantially letter L shape.

7. The table drive (1, 1A, 1B, 1C) according to one of claims 3 to 6, wherein at least one of an electric power supply line (71) configured to supply electric power to the first motor (4), a control line (73) configured to transmit a control command for stopping rotation of a rotating portion of the first motor (4), or a signal line (75) configured to transmit a signal from an encoder (74) provided in the first motor (4) to a controller (85) is disposed to pass through an opening (OP5) formed on at least one of the supply duct (51) or the exhaust duct (54).

8. The table drive (1, 1A, 1B, 1C) according to one of claims 1 to 7, wherein the first motor (4) is disposed directly on the support base (3, 3a, 3b).

9. The table drive (1, 1A, 1B, 1C) according to claim 2, further comprising a second cooling apparatus (15) configured to cool a second motor (14) using a coolant, wherein the table apparatus (2) comprises:
a rotation body (24) to which the table (21) is fixed, and which is supported by the support block (22) for the rotation body (24) to be rotatable about a second axis (AX2); and
the second motor (14) configured to rotate the rotation body (24) about the second axis (AX2),
wherein a coolant flow passage (FL) through which the coolant flows is disposed to pass through the support base (3, 3a, 3b).

10. The table drive (1, 1A, 1B, 1C) according to one of claims 1 to 9,
wherein an air inlet opening (OP1) of the supply duct (51) is a lateral side opening; and
wherein an air outlet opening (OP4) of the exhaust duct (54) is an upper opening.

11. A machine tool (100, 100A, 100B, 100C) comprising:
a machining head (HD) that is configured to support a tool (T) for machining a workpiece (W);
a mover (103) configured to move the machining head (HD); and
the table drive (1, 1A, 1B, 1C) according to claim 1.

12. The machine tool (100, 100A, 100B, 100C) according to claim 11, further comprising
an outer wall (108) that surrounds the table drive (1, 1A, 1B, 1C) and the machining head (HD) in a plan view,
wherein a first end portion (51a) of the supply duct (51) is connected with a first opening portion (E1) formed on the outer wall (108).

13. The machine tool (100, 100A, 100B, 100C) according to claim 12,
wherein an air outlet opening (OP4) of the exhaust duct (54) is disposed on an inner side than the outer wall (108) in the plan view.

14. The machine tool (100, 100A, 100B, 100C) according to claim 12 or 13, comprising:
a base structure (9) that supports a structure (104b, 105b, 106b) including the machining head (HD) to be movable; and
a cover (6) that surrounds the first motor (4),
wherein the cover (6) comprises a first wall (62a) disposed between the first motor (4) and the base structure (9).

15. A workpiece machining method comprising steps of:
cooling a first motor (4) in contact with a support base (3, 3a, 3b);
fixing a workpiece (W) to a table (21) of a table apparatus (2);
moving the table apparatus (2) relative to the support base (3, 3a, 3b) that supports the table apparatus (2), by using a driving force of the first motor (4): and
machining the workpiece (W) using a tool (T),
**characterised in that** the cooling of the first motor (4) comprises:
giving momentum to air using a fan (58);
supplying the air to a first portion (41) of the first motor (4) from a supply duct (51);
causing the air to flow from the first portion (41) of the first motor (4) toward a second portion (42) of the first motor (4) in a direction away from the support base (3, 3a, 3b) to cool the first motor (4) using the air; and
discharging the air from a periphery of the second portion (42) of the first motor (4) through an exhaust duct (54).

## Patentansprüche

1. Ein Tischantrieb (1, 1A, 1B, 1C), umfassend:
eine Tischvorrichtung (2), einen Tisch (21) umfassend, der eingerichtet ist, um ein Werkstück (W) zu tragen;
eine Trägerbasis (3, 3a, 3b), die die Tischvorrichtung (2) trägt;
einen ersten Motor (4), der einen ersten Abschnitt (41) in Kontakt mit der Trägerbasis (3, 3a, 3b) und einen zweiten Abschnitt (42) umfasst, der an einer Position angeordnet ist, die weiter von der Trägerbasis (3, 3a, 3b) entfernt ist als der erste Abschnitt (41), wobei der erste Motor (4) eingerichtet ist, um die Tischvorrichtung (2) relativ zu der Trägerbasis (3, 3a, 3b) zu bewegen; und
eine Kühlvorrichtung (5), die eingerichtet ist, um den ersten Motor (4) zu kühlen,
**dadurch gekennzeichnet, dass** die Kühlvorrichtung (5) umfasst:
ein Gebläse (58), das eingerichtet ist, um Luft einen Impuls zu geben;
Eine Zuführleitung (51), die eingerichtet ist, um dem ersten Abschnitt (41) des ersten Motors (4) die Luft zuzuführen; und
eine Abführleitung (54), die eingerichtet ist, um die Luft von einer Umgebung des zweiten Abschnitts (42) des ersten Motors (4) abzuführen.

2. Tischantrieb (1, 1A, 1B, 1C) nach Anspruch 1,
wobei die Tischvorrichtung (2) einen Trägerblock (22) umfasst, der den Tisch (21) entweder direkt oder indirekt trägt, und
wobei der erste Motor (4) ein Motor ist, der eingerichtet ist, um den Trägerblock (22) zu kippen.

3. Tischantrieb (1, 1A, 1B, 1C) nach Anspruch 1 oder 2, umfassend:
eine Abdeckung (6), die den ersten Motor (4) umgibt,
wobei die Abdeckung (6) einen Luftstromdurchgang (FP1) von dem ersten Abschnitt (41) des ersten Motors (4) zu dem zweiten Abschnitt (42) des ersten Motors (4) festlegt.

4. Tischantrieb (1, 1A, 1B, 1C) nach Anspruch 3, ferner umfassend:
eine Trennwand (11), die in einen ersten Bereich (RG1), in dem der Tisch (21) angeordnet ist, und einen zweiten Bereich (RG2), in dem der erste Motor (4) und die Abdeckung (6) angeordnet sind, unterteilt,
wobei die Abdeckung (6) eine erste Wand (62a) umfasst, die zwischen dem ersten Motor (4) und der Trennwand (11) angeordnet ist.

5. Tischantrieb (1, 1A, 1B, 1C) nach Anspruch 3 oder 4,
wobei die Zuführleitung (51), die Abdeckung (6) und die Abführleitung (54) einen Luftstromdurchgang festlegen, der eine im Wesentlichen U-Form hat.

6. Tischantrieb (1, 1A, 1B, 1C) nach einem der Ansprüche 3 bis 5,
wobei die Zuführleitung (51) und die Abdeckung (6) miteinander verbunden sind, so dass eine Anordnung der Zuführleitung (51) und der Abdeckung (6) entweder eine im Wesentlichen T-Form oder eine im Wesentlichen L-Form hat.

7. Tischantrieb (1, 1A, 1B, 1C) nach einem der Ansprüche 3 bis 6, wobei mindestens eine von einer Stromversorgungsleitung (71), die eingerichtet ist, um den ersten Motor (4) mit Strom zu versorgen, einer Steuerleitung (73), die eingerichtet ist, um einen Steuerbefehl zum Anhalten der Drehung eines rotierenden Abschnitts des ersten Motors (4) zu übertragen, oder einer Signalleitung (75), die eingerichtet ist, um ein Signal von einem in dem ersten Motor (4) vorgesehenen Encoder (74) zu einer Steuereinheit (85) zu übertragen, so angeordnet ist, dass sie durch eine Öffnung (OP5) führt, die an mindestens einem der Zuführleitung (51) oder der Abführleitung (54) ausgebildet ist.

8. Tischantrieb (1, 1A, 1B, 1C) nach einem der Ansprüche 1 bis 7, wobei der erste Motor (4) direkt an der Trägerbasis (3, 3a, 3b) angeordnet ist.

9. Tischantrieb (1, 1A, 1B, 1C) nach Anspruch 2, ferner umfassend:
eine zweite Kühlvorrichtung (15), die eingerichtet ist, um einen zweiten Motor (14) unter Verwendung eines Kühlmittels zu kühlen,
wobei die Tischvorrichtung (2) umfasst:
einen Rotationskörper (24), an dem der Tisch (21) befestigt ist und der von dem Trägerblock (22) getragen ist, so dass der Rotationskörper (24) um eine zweite Achse (AX2) drehbar ist; und
den zweiten Motor (14), der eingerichtet ist, um den Rotationskörper (24) um die zweite Achse (AX2) zu drehen,
wobei ein Kühlmittelfließdurchgang (FL), durch den das Kühlmittel fließt, angeordnet ist, um durch die Trägerbasis (3, 3a, 3b) zu verlaufen.

10. Tischantrieb (1, 1A, 1B, 1C) nach einem der Ansprüche 1 bis 9,
wobei eine Lufteinlassöffnung (OP1) der Zuführleitung (51) eine seitliche Seitenöffnung ist; und
wobei eine Luftauslassöffnung (OP4) der Abführleitung (54) eine obere Öffnung ist.

11. Eine Werkzeugmaschine (100, 100A, 100B, 100C) umfassend:
einen Bearbeitungskopf (HD), der eingerichtet ist, um ein Werkzeug (T) zum Bearbeiten eines Werkstücks (W) zu tragen;
eine Bewegungsvorrichtung (103), die eingerichtet ist, den Bearbeitungskopf (HD) zu bewegen; und
der Tischantrieb (1, 1A, 1B, 1C) nach Anspruch 1.

12. Werkzeugmaschine (100, 100A, 100B, 100C) nach Anspruch 11, ferner umfassend:
eine Außenwand (108), die den Tischantrieb (1, 1A, 1B, 1C) und den Bearbeitungskopf (HD) in einer Draufsicht umgibt,
wobei ein erster Endabschnitt (51a) der Zuführleitung (51) mit einem ersten Öffnungsabschnitt (E1) verbunden ist, der an der Außenwand (108) ausgebildet ist.

13. Werkzeugmaschine (100, 100A, 100B, 100C) nach Anspruch 12, wobei eine Luftauslassöffnung (OP4) der Abführleitung (54) in der Draufsicht an einer Seite innerhalb der Außenwand (108) angeordnet ist.

14. Werkzeugmaschine (100, 100A, 100B, 100C) nach Anspruch 12 oder 13, umfassend:
eine Basisstruktur (9), die eine Struktur (104b, 105b, 106b) trägt, die den Bearbeitungskopf (HD) aufweist, der beweglich sein soll; und
eine Abdeckung (6), die den ersten Motor (4) umgibt,
wobei die Abdeckung (6) eine erste Wand (62a) aufweist, die zwischen dem ersten Motor (4) und der Basisstruktur (9) angeordnet ist.

15. Werkstückbearbeitungsverfahren, umfassend Schritte des:
Kühlens eines ersten Motors (4) in Kontakt mit einer Trägerbasis (3, 3a, 3b);
Befestigens eines Werkstücks (W) an einem Tisch (21) einer Tischvorrichtung (2);
Bewegens der Tischvorrichtung (2) in Bezug zu der Trägerbasis (3, 3a, 3b), die die Tischvorrichtung (2) trägt, unter Verwendung einer Antriebskraft des ersten Motors (4); und
Bearbeitens des Werkstücks (W) unter Verwendung eines Werkzeugs (T),
**dadurch gekennzeichnet, dass** das Kühlen des ersten Motors (4) umfasst:
Luft unter Verwendung eines Gebläses einen Impuls Verleihen (58);
Zuführen der Luft zu einem ersten Abschnitt (41) des ersten Motors (4) von einer Zuführleitung (51);
Veranlassen, dass die Luft von dem ersten Abschnitt (41) des ersten Motors (4) zu einem zweiten Abschnitt (42) des ersten Motors (4) in einer Richtung weg von der Trägerbasis (3, 3a, 3b) strömt, um den ersten Motor (4) unter Verwendung der Luft zu kühlen; und
Abführen der Luft von einer Umgebung des zweiten Abschnitts (42) des ersten Motors (4) durch eine Abführleitung (54).

## Revendications

1. Entraînement de table (1, 1A, 1B, 1D) comprenant :
un appareil de table (2) comprenant une table (21) qui est configurée pour supporter une pièce à usiner (W) ;
une base de support (3, 3a, 3b) qui supporte l'appareil de table (2) ;
un premier moteur (4) comprenant une première partie (41) en contact avec la base de support (3, 3a, 3b) et une seconde partie (42) disposée à une position plus éloignée de la base de support (3, 3a, 3b) que la première partie (41), le premier moteur (4) étant configuré pour déplacer l'appareil de table (2) par rapport à la base de support (3, 3a, 3b) ; et
un appareil de refroidissement (5) configuré pour refroidir le premier moteur (4),
**caractérisé en ce que** l'appareil de refroidissement (5) comprend :
un ventilateur (58) configuré pour donner une impulsion à l'air ;
un conduit d'alimentation (51) configuré pour fournir l'air à la première partie (41) du premier moteur (4) ; et
un conduit d'échappement (54) configuré pour évacuer l'air depuis une périphérie de la deuxième partie (42) du premier moteur (4).

2. Appareil de table (1, 1A, 1B, 1D) selon la revendication 1,
dans lequel l'appareil de table (2) comprend un bloc de support (22) qui supporte la table (21) soit directement, soit indirectement, et
le premier moteur (4) est un moteur configuré pour incliner le bloc de support (22).

3. Appareil de table (1, 1A, 1B, 1C) selon la revendication 1 ou 2, comprenant
un capot (6) qui entoure le premier moteur (4),
dans lequel le capot (6) définit un passage de flux d'air (FP1) depuis la première partie (41) du premier moteur (4) vers la seconde partie (42) du premier moteur (4).

4. Appareil de table (1, 1A, 1B, 1C) selon la revendication 3, comprenant en outre :
une paroi de séparation (11) qui divise en une première zone (RG1) dans laquelle est disposée la table (21) et une seconde zone (RG2) dans laquelle sont disposés le premier moteur (4) et le capot (6),
dans lequel le capot (6) comprend une première paroi (62a) disposée entre le premier moteur (4) et la paroi de séparation (11).

5. Appareil de table (1, 1A, 1B, 1C) selon la revendication 3 ou 4,
dans lequel le conduit d'alimentation (51), le capot (6) et le conduit d'échappement (54) définissent un passage de flux d'air ayant une forme sensiblement en U.

6. Appareil de table (1, 1A, 1B, 1C) selon une des revendications 3 à 5,
dans lequel le conduit d'alimentation (51) et le capot (6) sont reliés l'un à l'autre pour qu'une disposition du conduit d'alimentation (51) et du capot (6) ait soit une forme sensiblement en T, soit une forme sensiblement en L.

7. Entraînement de table (1, 1A, 1B, 1C) selon une des revendications 3 à 6, dans lequel au moins un parmi une ligne d'alimentation de puissance électrique (71) configurée pour fournir de puissance électrique au premier moteur (4), une ligne de commande (73) configurée pour transmettre un ordre de commande pour arrêter une rotation d'une partie rotative du premier moteur (4), ou une ligne de signal (75) configurée pour transmettre un signal depuis un encodeur (74) prévu dans le premier moteur (4) à un dispositif de commande (85) est disposée pour passer à travers une ouverture (OP5) formée sur au moins un parmi le conduit d'alimentation (51) ou le conduit d'échappement (54).

8. L'entraînement de table (1, 1A, 1B, 1C) selon une des revendications 1 à 7, dans lequel le premier moteur (4) est disposé directement à la base de support (3, 3a, 3b).

9. Appareil de table (1, 1A, 1B, 1C) selon la revendication 2, comprenant en outre :
un second appareil de refroidissement (15) configuré pour refroidir un second moteur (14) en utilisant un liquide de refroidissement,
dans lequel l'appareil de table (2) comprend :
un corps de rotation (24) auquel la table (21) est fixée et qui est supporté par le bloc de support (22) pour que le corps de rotation (24) puisse tourner autour d'un second axe (AX2) ; et
une seconde moteur (14) configurée pour faire tourner le corps de rotation (24) autour du deuxième axe (AX2),
dans lequel un passage d'écoulement du liquide de refroidissement (FL) à travers lequel le liquide de refroidissement s'écoule est disposé pour passer à travers la base de support (3, 3a, 3b).

10. Appareil de table (1, 1A, 1B, 1C) selon une des revendications 1 à 9,
dans lequel une ouverture d'entrée d'air (OP1) du conduit d'alimentation (51) est une ouverture de côté latérale ; et
dans lequel une ouverture de sortie d'air (OP4) du conduit d'échappement (54) est une ouverture supérieure.

11. Outil d'usinage (100, 100A, 100B, 100C) comprenant :
une tête d'usinage (HD) qui est configurée pour supporter un outil (T) pour usiner une pièce à usiner (W) ;
un dispositif de déplacement (103) configuré pour déplacer la tête d'usinage (HD) ; et
l'appareil de table (1, 1A, 1B, 1D) selon la revendication 1,

12. Appareil de table (100, 100A, 100B, 100C) selon la revendication 11, comprenant en outre :
une paroi extérieure (108) qui entoure l'entraînement de table (1, 1A, 1B, 1C) et la tête d'usinage (HD) dans une vue en plan,
dans lequel une première partie d'extrémité (51a) du conduit d'alimentation (51) est reliée à une première partie d'ouverture (E1) formée sur la paroi extérieure (108).

13. Outil d'usinage (100, 100A, 100B, 100C) selon la revendication 12,
dans lequel une ouverture de sortie d'air (OP4) du conduit d'échappement (54) est disposée sur un côté à l'intérieur de la paroi extérieure (108) dans la vue en plan.

14. Appareil de table (100, 100A, 100B, 100C) selon la revendication 12 ou 13, comprenant :
une structure de base (9) qui supporte une structure (104b, 105b, 106b) comprenant la tête d'usinage (HD) qui doit être mobile ; et
un capot (6) qui entoure le premier moteur (4),
dans lequel le capot (6) comprend une première paroi (62a) disposée entre le premier moteur (4) et la structure de base (9).

15. Procédé d'usinage de pièce à usiner comprenant des étapes de :
refroidir un premier moteur (4) en contact avec une base de support (3, 3a, 3b) ;
fixer une pièce à usiner (W) à une table (21) d'un appareil de table (2) ;
déplacer l'appareil de table (2) par rapport à la base de support (3, 3a, 3b) qui supporte l'appareil de table (2), en utilisant une force d'entraînement du premier moteur (4) : et
usiner la pièce à usiner (W) en utilisant un outil (T),
**caractérisé en ce que** le refroidissement du premier moteur (4) comprend :
donner une impulsion à l'air en utilisant un ventilateur (58) ;
fournir l'air à une première partie (41) du premier moteur (4) depuis un conduit d'alimentation (51) ;
amener l'air à s'écouler depuis la première partie (41) du premier moteur (4) vers une seconde partie (42) du premier moteur (4) dans une direction s'éloignant de la base de support (3, 3a, 3b) pour refroidir le premier moteur (4) en utilisant l'air ; et
évacuer l'air depuis une périphérie de la deuxième partie (42) du premier moteur (4) à travers un conduit d'échappement (54).
